# EUROPÄISCHE PATENTSCHRIFT

(11) **EP 3 887 911 B1**
(45) Veröffentlichungstag und Bekanntmachung des Hinweises auf die Patenterteilung: **11.01.2023**
(21) Anmeldenummer: 19832927.8
(22) Anmeldetag: 19.12.2019
(51) Int. Cl.: G05B 13/02, G05B 19/19

(54) **VERFAHREN ZUM STEUERN EINES AUTOMATISIERUNGSPROZESSES IN ECHTZEIT**
METHOD FOR CONTROLLING AN AUTOMATION PROCESS IN REAL TIME
PROCÉDÉ DE COMMANDE D'UN PROCESSUS D'AUTOMATISATION EN TEMPS RÉEL

(30) Priorität: 20.12.2018 DE 102018133058
(43) Veröffentlichungstag der Anmeldung: 06.10.2021
(73) Patentinhaber: Beckhoff Automation GmbH, 33415 Verl (DE)
(72) Erfinder: NEUMANN, Klaus, 33330 Gütersloh (DE)
(74) Vertreter: Patentanwaltskanzlei WILHELM & BECK
(86) Internationale Anmeldenummer: PCT/EP2019/086426
(87) Internationale Veröffentlichungsnummer: WO 2020/127809

(56) Entgegenhaltungen:
- US-A- 6 029 095
- US-A1- 2004 249 483
- US-A1- 2017 031 343
- RICHTER MARKUS ET AL: "Model predictive trajectory planning with fallback-strategy for an active Heave Compensation system", 2015 AMERICAN CONTROL CONFERENCE (ACC), IEEE, 4 June 2014 (2014-06-04), pages 1919-1924, XP032622077, ISSN: 0743-1619, DOI: 10.1109/ACC.2014.6859017 [retrieved on 2014-07-17]

## Beschreibung

Die Erfindung betrifft ein Verfahren zum Steuern eines Automatisierungsprozesses in Echtzeit. Die Erfindung betrifft ferner ein System zum Steuern eines Automatisierungsprozesses in Echtzeit. Die Erfindung betrifft zusätzlich ein Computerprogramm zum Ausführen eines Verfahrens zum Steuern eines Automatisierungsprozesses in Echtzeit und ein Speichermedium mit dem Computerprogramm.

### Stand der Technik

Bei modernen hochkomplexen Automatisierungsprozessen kann es von Bedeutung sein, dass die Steuerung echtzeitfähig ist. Dies verlangt, dass der jeweilige Prozess eine deterministische Berechnungskomplexität aufweist. Damit kann gewährleistet werden, dass eine gewisse Aufgabe oder ein gewisser Prozessschritt innerhalb einer vorbestimmten maximalen Zeitdauer durchgeführt und abgeschlossen ist.

Aus der DE 10 2016 107 527 A1 ist eine Echtzeitumgebung und speicherprogrammierbare Steuerung bekannt, die die Abarbeitung wenigstens einer Task innerhalb einer vorgegebenen Task-Laufzeit ermöglicht. Hierzu legt eine Zeitüberwachungsfunktion einen Abbruchszeitpunkt für die Task innerhalb der Task-Laufzeit fest und veranlasst einen Taskabbruch bei Überschreiten der Task-Laufzeit.

Aus der Druckschrift US 2017/031343 A1 sind ein Fertigungswerkzeug, eine Simulationsvorrichtung und eine Vorrichtung zum maschinellen Lernen bekannt. Aus der Druckschrift US 6 029 095 A sind ein Verfahren und eine Vorrichtung zur dynamischen Systemsteuerung bekannt. Aus der Druckschrift US 2004/249483 A1 sind Multiple-Input/Multiple-Output Steuerungsblöcke mit nichtlinearen Vorhersagefähigkeiten bekannt.

Aus der Druckschrift XP032622077 ist eine modellprädiktive Trajektorienplanung (MPTP) mit Rückfallstrategie für ein aktives Hebekompensationssystem wobei zum aktiven Hebeausgleich die Anwendung eines modellprädiktiven Trajektorienplaners zum Erstellen einer Bewegungstrajektorie eines über eine Hebewinde zu hebenden Objekts verwendet wird bekannt.

Moderne hochkomplexe Automatisierungsprozesse weisen unter anderem eine Vielzahl verschiedener Prozessparameter auf, die den Prozess und sich gegenseitig beeinflussen. Die hohe Anzahl an Prozessparametern kann dazu führen, dass eine Vielzahl verschiedener Parameterkombinationen äquivalente Lösungen für einen gesuchten Prozessverlauf darstellen können.

Es ist daher eine Aufgabe moderner Prozesssteuerungen, Automatisierungsprozesse in einer in Bezug auf vorbestimmte Optimierungskriterien optimierten Weise zu steuern.

Derartige Optimierungsprobleme lassen sich mittels Methoden der nichtlinearen Optimierung lösen. Beispielsweise können mittels jeweiligen an das Problem angepassten numerischen Näherungsverfahren die Prozessparameter an eine Lösung angenähert werden, die ein vorbestimmtes Optimierungskriterium erfüllt oder minimiert.

Numerische Näherungsverfahren erlauben eine Qualitätsgarantie der ermittelten Ergebnisse, indem die jeweiligen Näherungsverfahren regelbar sind, erst zu terminieren, wenn eine bestimmte Güte des Näherungsergebnisses erreicht ist.

Numerische Näherungsverfahren sind jedoch nicht echtzeitfähig, da ein Terminieren des Näherungsverfahrens innerhalb einer maximalen Zeitdauer nicht garantiert werden kann.

Aus der WO 93/12475 A1 ist ein Verfahren zur Optimierung von Steuerparametern für ein System bekannt, das in Abhängigkeit der Steuerparameter ein Ist-Verhalten aufweist. Das Dokument lehrt hierbei zur Parameteroptimierung ein künstliches Neuronales Netz zu verwenden.

Künstliche Neuronale Netze sind in der Inferenzphase echtzeitfähig und besitzen eine deterministische Laufzeitkomplexität, die in einem proportionalen Zusammenhang zur Modellkomplexität steht. Die Berechnungskomplexität ist damit gut steuerbar. Somit kann das erzielen eines Ergebnisses des Näherungsverfahrens innerhalb einer vorbestimmten Zeitdauer gewährleistet werden.

Die Qualität eines solchen Ergebnisses kann aber nicht garantiert werden, da der Näherungsprozess eines Neuronalen Netzes keine Qualitätskriterien umfasst.

Die der Erfindung zugrunde liegende Aufgabe kann darin gesehen werden, ein effizientes Verfahren zum Steuern eines Automatisierungsprozesses in Echtzeit, ein effizientes Automatisierungssystem, ein Computerprogramm zum Ausführen eines effizienten Verfahrens zum Steuern eines Automatisierungsprozesses in Echtzeit und ein Speichermedium mit dem Computerprogramm bereitzustellen.

Die Aufgabe wird mittels der Gegenstände der unabhängigen Ansprüche gelöst. Vorteilhafte Ausgestaltungen der Erfindung sind Gegenstand der jeweils abhängigen Ansprüche.

Nach einem Aspekt der Erfindung wird ein Verfahren zum Steuern eines Automatisierungsprozesses in Echtzeit auf Basis eines Änderungsprofils zumindest einer Prozessgröße bereitgestellt, die Verfahrensschritte umfassend: Ermitteln eines ersten Änderungsprofils mittels eines echtzeitfähigen auf einem nichtlinearen Optimierungsprozess basierenden Erkennungsverfahren unter Berücksichtigung zumindest einer Randbedingung der Prozessgröße, Ermitteln eines zweiten Änderungsprofils mittels eines numerischen Algorithmus auf Basis des ersten Änderungsprofils, umfassend: Anpassen einer ausgewählten Profilfunktion an das erste Änderungsprofil mittels eines numerischen Anpassungsprozesses, und Identifizieren der angepassten Profilfunktion als zweites Änderungsprofil, Überprüfen, ob das zweite Änderungsprofil zumindest einer Nebenbedingung der Prozessgröße genügt, Steuern des Automatisierungsprozesses auf Basis des zweiten Änderungsprofils, wenn das zweite Änderungsprofil der zumindest einen Nebenbedingung genügt, und Steuern des Automatisierungsprozesses auf Basis eines vorbestimmten Rückfallprofils, wenn das zweite Änderungsprofil der zumindest einen Nebenbedingung nicht genügt.

Hierdurch wird erreicht, dass ein effizientes Verfahren zum Steuern eines Automatisierungsprozesses in Echtzeit bereitgestellt werden kann.

Durch das echtzeitfähige auf einem nichtlinearen Optimierungsprozess basierende Erkennungsverfahren kann gewährleistet werden, dass zu einem gegebenen Automatisierungsprozess innerhalb einer vorgegebenen Zeitdauer wenigstens ein erstes Änderungsprofil bereitgestellt wird, das zum Steuern des Automatisierungsprozesses geeignet ist.

Darüber hinaus kann gewährleistet werden, dass das bereitgestellte Änderungsprofil wenigstens einem Optimierungskriterium entspricht und somit zu einem in Bezug auf dieses Optimierungskriterium optimierten Prozessverlauf führt.

Mittels eines numerischen Algorithmus kann darauffolgend auf Basis des ersten Änderungsprofils ein zweites Änderungsprofil erstellt werden, das eine Randbedingung, beziehungsweise gegebenenfalls eine Mehrzahl von Randbedingungen, erfüllt und den Optimierungsgrad des ersten Änderungsprofils aufweist.

Der numerische Algorithmus ist in diesem Zusammenhang derart ausgestaltet, dass auch für den numerischen Algorithmus gewährleistet ist, dass dieser innerhalb einer vorbestimmten Zeitdauer zu einem Ergebnis führt.

Das zweite Änderungsprofil wird darauffolgend überprüft, ob dieses eine Nebenbedingung, beziehungsweise gegebenenfalls eine Mehrzahl von Nebenbedingungen, einhält, die für einen sicheren und effizienten Prozessverlauf erfüllt sein müssen. Auch diese Überprüfung ist derart ausgestaltet, dass ein erfolgreicher Abschluss des Überprüfungsprozesses innerhalb einer vorbestimmten Zeitdauer garantiert ist.

Die Überprüfung des zweiten Änderungsprofils kann eine Untersuchung des zweiten Änderungsprofils in Bezug auf Maximalstellen, Minimalstellen, Steigungen, Steigungsänderungen, Wendepunkte, Unstetigkeitsstellen und/oder ähnliches umfassen.

Die Überprüfung des zweiten Änderungsprofils kann auch das Erstellen von Ableitungen n-ter Ordnung des ersten Änderungsprofils und das Überprüfen dieser Ableitungen in Bezug auf die oben genannten Merkmale umfassen.

Auch die Überprüfung erfüllt die Echtzeitbedingung.

Bei einem positiven Ergebnis wird das zweite Änderungsprofil zum Steuern des Automatisierungsprozesses verwendet.

Bei einem negativen Ergebnis wird ein vorbestimmtes Rückfallprofil zum Steuern des Automatisierungsprozesses verwendet, wobei das vorbestimmte Rückfallprofil die Randbedingung und die Nebenbedingung erfüllt und somit für einen sicheren und effizienten Ablauf des Automatisierungsprozesse geeignet ist.

Das Rückfallprofil ist nicht auf den jeweiligen Automatisierungsprozess optimiert und wird nicht mittels des echtzeitfähigen auf einem nichtlinearen Optimierungsprozess basierenden Erkennungsverfahrens erzeugt. Das Rückfallprofil ist dahingehend ausgestaltet, die Randbedingung und die Nebenbedingungen zu erfüllen und einen gesicherten und effizienten, wenn auch nicht optimierten, Prozessablauf gewährleisten zu können.

Das Rückfallprofil steht innerhalb der vorbestimmten Zeitdauer zum Steuern des Automatisierungsprozesses zur Verfügung und kann anhand der Randbedingungen und Nebenbedingungen ermittelt oder aus einer entsprechenden Datenbank entnommen werden.

Die Steuerung des Automatisierungsprozesses ist somit sowohl über das zweite Änderungsprofil als auch über das Rückfallprofil innerhalb einer vorbestimmten Zeitdauer gewährleistet.

Es ist damit garantiert, dass zu jedem zu steuernden Automatisierungsprozess innerhalb der für die Echtzeitanforderung einzuhalten Zeitdauer ein Änderungsprofil bereitgestellt ist, das den Rand- und Nebenbedingungen entspricht, und mittels dem der Automatisierungsprozess gesteuert werden kann.

Es ist auch möglich einen Automatisierungsprozess auf Basis einer Mehrzahl von Prozessgrößen zu steuern. Hierzu können beispielsweise eine Mehrzahl von Änderungsprofilen ermittelt werden, anhand denen die Steuerung des Prozesses vorgenommen wird.

Ein Automatisierungsprozess ist im Folgenden jeder automatisierte Arbeitsprozess, bei dem eine Abfolge einzelner Arbeitsschritte wenigstens teilweise automatisch, also autonom, selbständig und ohne das aktive Einwirken eines Nutzers eines den Arbeitsprozess ausführenden Systems, ausgeführt wird. Auch kann unter Automatisierungsprozess jeder in sich abgeschlossene Teilprozess eines automatisierten Arbeitsprozesses verstanden sein. Der in sich abgeschlossene Teilprozess bildet in Zusammenwirkung mit weiteren Teilprozessen den automatisierten Arbeitsprozess. Dies umfasst unter anderem prozessindustrielle Automatisierungsprozesse.

Unter Echtzeitfähigkeit wird im Folgenden die Fähigkeit verstanden, für einen Prozess oder Vorgang garantieren zu können, dass dieser Prozess oder Vorgang zu einer vorbestimmten Zeitdauer von Beginn des Prozesses oder Vorgangs an gerechnet zu einem Abschluss und einem Ergebnis führt. Eine Fortdauer des Prozesses oder Vorgangs über diese Zeitdauer hinaus oder das Nichtvorliegen eines Ergebnisses innerhalb der Zeitdauer wird hingegen ausgeschlossen.

Ein echtzeitfähiges auf einem nichtlinearen Optimierungsprozess basierendes Erkennungsverfahren ist ein Prozess, der die Ausgabe eines Ergebnisses innerhalb einer vorbestimmten Zeitdauer zu einem nichtlinearen Optimierungsproblem gewährleisten kann.

Hierzu verwendet das echtzeitfähige auf einem nichtlinearen Optimierungsprozess basierende Erkennungsverfahren Optimierungsergebnisse, die zuvor mittels des nichtlinearen Optimierungsprozesses erstellt wurden. Diese erstellten Optimierungsergebnisse können bezüglich eines Optimierungskriteriums oder bezüglich einer Vielzahl von Optimierungskriterien und einer Vielzahl von Randbedingungen und/oder Nebenbedingungen optimiert sein.

Ein nichtlinearer Optimierungsprozess kann beispielsweise ein numerischer Anpassungsprozess mit einer nichtlinearen Anpassungsfunktion sein, bei dem entsprechende Funktionsparameter derart variiert werden, dass die Anpassungsfunktion den jeweiligen Optimierungskriterien entspricht.

Unter Berücksichtigung eines für einen bestimmten Automatisierungsprozess relevanten Optimierungskriteriums oder einer Vielzahl von Optimierungskriterien und zumindest einer für den Automatisierungsprozess relevanten Randbedingung reproduziert das echtzeitfähige auf einem nichtlinearen Optimierungsprozess basierende Erkennungsverfahren auf echtzeitfähige Weise die Optimierungsergebnisse des nichtechtzeitfähigen nichtlinearen Optimierungsprozesses, um zumindest ein Ergebnis zu erkennen, das sowohl dem Optimierungskriterium als auch der zumindest einen Randbedingung genügt.

Hierzu erkennt das echtzeitfähige auf einem nichtlinearen Optimierungsprozess basierende Erkennungsverfahren ein optimales Ergebnis, das allen Optimierungskriterien und Randbedingungen genügt, oder ein nicht-optimales Ergebnis, das lediglich einer Teilmenge, bestenfalls einer Mehrzahl, der Optimierungskriterien und Randbedingungen genügt, und gibt dieses optimale oder nicht-optimale Ergebnis als Ergebnis des Optimierungsproblems aus.

Wird kein optimales Ergebnis erkannt, kann das echtzeitfähige auf einem nichtlinearen Optimierungsprozess basierende Erkennungsverfahren in einem Lernprozess, in dem weitere nichtlineare Optimierungsprozesse durchgeführt werden, weitere Optimierungsergebnisse erzeugen, um in einem folgenden Erkennungsprozess durch das echtzeitfähige auf einem nichtlinearen Optimierungsprozess basierende Erkennungsverfahren aus den Optimierungsergebnissen optimale Ergebnisse zu erkennen, die den jeweiligen Optimierungskriterien und Randbedingungen entsprechen.

Die in den Optimierungsprozessen bestimmten Optimierungsergebnisse sind vorliegend Änderungsprofile zu bestimmten Automatisierungsprozessen.

In einem Erkennungsprozess durch das echtzeitfähige auf einem nichtlinearen Optimierungsprozess basierende Erkennungsverfahren erkennt das echtzeitfähige auf einem nichtlinearen Optimierungsprozess basierende Erkennungsverfahren aus zuvor durch den nichtlinearen Optimierungsprozess bestimmten Änderungsprofilen, die Änderungsprofile, die allen durch den jeweiligen Automatisierungsprozess bedingten Optimierungskriterien, Randbedingungen und gegebenenfalls Nebenbedingungen entspricht.

Der Erkennungsprozess des echtzeitfähigen auf einem nichtlinearen Optimierungsprozess basierenden Erkennungsverfahrens ist echtzeitfähig.

Der lineare Optimierungsprozess ist nicht-echtzeitfähig und wird zeitlich vor dem Beginn des Erkennungsprozesses durchgeführt.

Eine Prozessgröße ist vorliegend eine physikalisch technische Größe, mittels der ein bestimmter Automatisierungsprozess identifiziert und verfolgt beziehungsweise gesteuert werden kann.

Beispielsweise kann in einem Automatisierungsprozess, in dem eine Punkt-zu-Punkt-Bewegung eines beweglichen Objekts gesteuert wird, die Position des jeweiligen Objekts in einem entsprechenden Koordinatensystem als Prozessgröße dienen, über die der Verlauf des jeweiligen Prozesses verfolgt und gesteuert werden kann.

Alternativ kann aber auch jede andere physikalisch technische Größe, die Aussagen über den Prozessverlauf zulässt und anhand welcher der Prozess gesteuert werden kann, als Prozessgröße dienen.

Unter einem Änderungsprofil wird im Folgenden ein Verlauf einer Prozessgröße in Bezug auf ein jeweiliges Argument der Prozessgröße verstanden. Es ist jedoch auch möglich in einem Änderungsprofil die Verläufe mehrerer Prozessgrößen zu beschreiben.

Vorzugsweise werden in einem solchen Fall die Verläufe einzelner Prozessgrößen bezüglich eines einheitlichen Arguments betrachtet.

Für gewöhnlich kann der Verlauf einer Prozessgröße in Bezug auf die Zeit betrachtet werden. Ein entsprechendes Änderungsprofil ist demnach durch den zeitlichen Verlauf der Prozessgröße über einen vorbestimmten Zeitraum gegeben.

Die Änderung einer Prozessgröße kann in diesem Zusammenhang auch, auf einem Teilbereich oder dem gesamten Bereich des Änderungsprofils, den Wert Null annehmen. Die Prozessgröße weist in diesem Bereich einen konstanten Verlauf auf.

Das Änderungsprofil ist graphisch darstellbar durch eine Auftragung der jeweiligen Prozessgröße gegen das entsprechende Argument der Prozessgröße. Das Änderungsprofil weist somit einen bestimmten Definitionsbereich auf, auf dem das Profil definiert ist und auf dem das Änderungsprofil gewisse individuelle Eigenschaften, wie Stetigkeit oder Differenzierbarkeit, aufweist.

Ein Rückfallprofil ist ein Änderungsprofil im hier angeführten Sinn, auf das für einen bestimmten Prozess zurückgegriffen wird, wenn für den jeweiligen Prozess ein zweites Änderungsprofil, das sowohl dem Optimierungskriterium als auch der Randbedingung und der Nebenbedingung genügt, nicht gefunden werden kann.

Das Rückfallprofil kann simultan zur Ermittlung der ersten und zweiten Änderungsprofile auf Basis der Rand- und Nebenbedingungen erstellt werden, wobei hierzu kein Optimierungsprozess benötigt wird. Oder das Rückfallprofil kann aus einer Menge, bereits bekannter und als tauglich eingestufter und, beispielsweise in einer entsprechenden Datenbank, hinterlegter Rückfallprofile ausgewählt werden. Es ist somit garantiert, dass das Rückfallprofil innerhalb der vorbestimmten Zeitdauer zur Verfügung steht.

Ein Optimierungskriterium ist eine physikalisch technische Größe auf die ein Änderungsprofil, und damit ein Verlauf einer Prozessgröße des Automatisierungsprozesses, mittels des nicht echtzeitfähigen nichtlinearen Optimierungsprozesses optimiert wird.

Ein Optimierungskriterium kann beispielsweise ein Energieverbrauch, ein Materialverbrauch, eine Materialbelastung von Prozesskomponenten, eine Zeitdauer des Prozesses, eine Schwingungsanregung und ähnliches sein. Optimierungskriterien können zwischen verschiedenen Automatisierungsprozessen variieren.

Randbedingungen und Nebenbedingungen sind Bedingungen, die ein Änderungsprofil, beziehungsweise die eine Änderung einer Prozessgröße einhalten muss, damit das entsprechende Profil für den geplanten Automatisierungsprozess verwendet werden kann.

Die Randbedingungen und Nebenbedingungen legen den Rahmen fest, innerhalb dem die Werte einer Prozessgröße und die Änderungen der Prozessgröße, inklusive der Geschwindigkeit und der Beschleunigung, die diese im Zuge eines Prozessverlaufs erfährt, liegen dürfen, ohne die Sicherheit, die Effektivität und/oder den reibungslosen Verlauf des jeweiligen Automatisierungsprozesses zu gefährden.

Bei Teilprozessen können Rand- und Nebenbedingungen auch das reibungslose Ineinandergreifen einzelner Teilprozesse bestimmen.

Eine Profilfunktion ist eine mathematische Funktion, die geeignet ist, einen Verlauf einer Prozessgröße, sprich ein Änderungsprofil der jeweiligen Prozessgröße, in Bezug auf ein entsprechendes Argument der Prozessgröße zu repräsentieren.

Ein Argument kann eine physikalisch technische Größe sein, gegenüber der eine Änderung der Prozessgröße bestimmbar ist. Ein Beispiel für ein Argument ist die Zeit.

Ein Anpassungsprozess ist im Folgenden ein Prozess, indem über Variation entsprechender Parameter einer Profilfunktion die Profilfunktion derart modifiziert wird, dass die Profilfunktion einer individuellen Menge von Datenpunkten oder anderen Anpassungskriterien entspricht.

Nach einer Ausführungsform ist das echtzeitfähige auf einem nichtlinearen Optimierungsprozess basierende Erkennungsverfahren durch ein künstliches Neuronales Netz realisiert, wobei ein nichtlinearer Optimierungsprozess während zumindest eines Lernprozesses des künstlichen Neuronalen Netzes durchgeführt wird.

Hierdurch wird der technische Vorteil erreicht, dass echtzeitfähige Ergebnisse zu nichtlinearen Optimierungsproblemen erzielt werden können.

Darüber hinaus kann über Lernprozesse des künstlichen Neuronalen Netzes dessen Performance ständig verbessert werden, bis Ergebnisse gefunden werden, die allen Optimierungskriterien und allen Randbedingungen und allen Nebenbedingungen genügen.

Während des Lernprozesses des künstlichen Neuronalen Netzes wird ein nichtlinearer Optimierungsprozess durchgeführt, um Optimierungsergebnisse zu dem jeweiligen nichtlinearen Optimierungsproblem zu finden, die zumindest einem Optimierungskriterium, alternativ einer Mehrzahl von vorbestimmten Optimierungskriterien, und gegebenenfalls zumindest einer Randbedingung, alternativ einer Mehrzahl von vorbestimmten Randbedingungen und/oder zumindest einer Nebenbedingung, alternativ einer Mehrzahl von vorbestimmten Nebenbedingungen genügen.

In einem Erkennungsprozess des künstlichen Neuronalen Netzes, in dem zu zumindest einem Optimierungskriterium, alternativ zu einer Mehrzahl von Optimierungskriterien und zu zumindest einer Randbedingung, alternativ zu einer Mehrzahl von Randbedingungen und/oder zu zumindest einer Nebenbedingung, alternativ zu einer Mehrzahl Nebenbedingungen ein optimales Ergebnis gefunden werden soll, das allen Optimierungskriterien, Randbedingungen und Nebenbedingungen genügt, erkennt das künstliche Neuronale Netz aus den zuvor bestimmten Optimierungsergebnissen des nichtlinearen Optimierungsprozesses ein Optimierungsergebniss, das allen Optimierungskriterien, allen Randbedingungen und allen Nebenbedingungen genügt, und gibt dieses Ergebnis als optimales Ergebnis des Optimierungsproblems aus.

Erkennt das künstliche Neuronale Netz kein optimales Ergebnis, das allen Optimierungskriterien, allen Randbedingungen und allen Nebenbedingungen genügt, erkennt das künstliche Neuronale Netz auf Basis einer zuvor bestimmten Gewichtung ein Ergebnis, das zumindest einer Teilmenge, bestenfalls einer Mehrzahl der Optimierungskriterien, einer Teilmenge, bestenfalls einer Mehrzahl der Randbedingungen und einer Teilmenge, bestenfalls einer Mehrzahl der Nebenbedingungen genügt, und gibt dieses Ergebnis als Ergebnis des Optimierungsproblems aus.

Die Gewichtung kann während des Lernprozesses des künstlichen Neuronalen Netzes bestimmt werden.

Während des Lernprozesses des künstlichen Neuronalen Netzes können nichtlineare Optimierungsprozesse durchgeführt werden, um weitere Optimierungsergebnisse zu bestimmen, die weiteren Optimierungskriterien und gegebenenfalls weiteren Randbedingungen und weiteren Nebenbedingungen entsprechen, sodass in folgenden Erkennungsprozessen das künstliche Neuronale Netz aus den bestimmten Optimierungsergebnissen optimale Ergebnisse erkennt, die allen Optimierungskriterien, allen Randbedingungen und allen Nebenbedingungen genügen.

In den nichtlinearen Optimierungsprozessen können auch verschiedene Prozessgrößen berücksichtigt werden.

Die in den Optimierungsprozessen bestimmten Optimierungsergebnisse sind vorliegend Änderungsprofile zu bestimmten Automatisierungsprozessen.

In einem Erkennungsprozess durch das künstliche Neuronale Netz erkennt das künstliche Neuronale Netz aus zuvor durch den nichtlinearen Optimierungsprozess bestimmten Änderungsprofilen, die Änderungsprofile, die allen durch den jeweiligen Automatisierungsprozess bedingten Optimierungskriterien, Randbedingungen und gegebenenfalls Nebenbedingungen entsprechen.

Nach einer Ausführungsform umfasst das Anpassen der ausgewählten Profilfunktion an das erste Änderungsprofil mittels des numerischen Anpassungsprozesses die Verfahrensschritte: Ermitteln von zumindest einem Datenpunkt des ersten Änderungsprofils, und Anpassen der ausgewählten Profilfunktion an den zumindest einen Datenpunkt des ersten Änderungsprofils und an die zumindest eine Randbedingung.

Hierdurch wird eine einfach durchzuführende Anpassung der Profilfunktion an das erste Änderungsprofil ermöglicht, indem mittels eines geeigneten Anpassungsalgorithmus die Profilfunktion derart modifiziert wird, dass diese dem zumindest einen Datenpunkt entspricht.

Ein Datenpunkt ist vorliegend ein geordnetes Wertepaar bestehend aus einem Argumentwert und dem dazugehörigen Wert der jeweiligen Prozessgröße. Ein Datenpunkt entspricht damit einem Punkt auf einem Änderungsprofil der jeweiligen Prozessgröße zu einem gegebenen Argumentwert.

Nach einer Ausführungsform umfasst das Verfahren zum Steuern eines Automatisierungsprozesses in Echtzeit ferner den Verfahrensschritt Bestimmen der zumindest einen Randbedingung und der zumindest einen Nebenbedingung.

Hierdurch wird der technische Vorteil erreicht, dass für beliebige Automatisierungsprozesse und beliebige Prozessgrößen Randbedingungen und Nebenbedingungen individuell bestimmbar sind.

Nach einer Ausführungsform umfasst der Verfahrensschritt Ermitteln eines ersten Änderungsprofils den Verfahrensschritt Ermitteln des ersten Änderungsprofils mittels eines echtzeitfähigen auf einem nichtlinearen Optimierungsprozess basierenden Erkennungsverfahrensunter Berücksichtigung der zumindest einen Randbedingung und der zumindest einen Nebenbedingung.

Hierdurch wird der technische Vorteil erreicht, dass eine präzise Ermittlung eines optimierten ersten Änderungsprofils erreicht werden kann. Durch das Einfließen der Information der zumindest einen Nebenbedingung in das echtzeitfähige auf einem nichtlinearen Optimierungsprozess basierende Erkennungsverfahren ist ein optimiertes erstes Änderungsprofil erreichbar, das der zumindest einen Nebenbedingung genügt.

Nach einer Ausführungsform umfasst das Verfahren zum Steuern eines Automatisierungsprozesses in Echtzeit ferner den Verfahrensschritt Erzeugen des Rückfallprofils auf Basis der zumindest einen Randbedingung und der zumindest einen Nebenbedingung.

Hierdurch wird der technische Vorteil erreicht, dass für beliebige Automatisierungsprozesse und beliebige Prozessgrößen Rückfallprofile bereitgestellt werden können, die der zumindest einen Randbedingung und der zumindest einen Nebenbedingung genügen.

Bei Scheitern der Ermittlung eines zweiten Änderungsprofils, das der zumindest einen Randbedingung und der zumindest einen Nebenbedingung genügt, kann ein Anhalten des Automatisierungsprozesses vermieden werden und ein sicheres Anfahren oder Fortsetzen des Automatisierungsprozesses ist stets ermöglicht. Die Prozessgröße genügt hierbei stets den Bedingungen für einen sicheren und problemlosen Prozessverlauf.

Nach einer Ausführungsform ist die ausgewählte Profilfunktion ein quintischer Spline und zumindest 2-fach stetig differenzierbar.

Mit dem quintischen Spline liegt eine Profilfunktion mit einer vergleichsweise geringen Komplexität vor, die einfach handhabbar ist.

Mittels einer Spline-Interpolation kann die Anpassung der Profilfunktion an das erste Änderungsprofil beziehungsweise an die Datenpunkte des ersten Änderungsprofils vereinfacht und damit beschleunigt werden, sodass das Einhalten der Echtzeitbedingungen erfüllt werden kann.

Über die zumindest 2-fach stetige Differenzierbarkeit kann wiederum erreicht werden, dass das zweite Änderungsprofil zumindest 2-fach stetig differenzierbar ist.

Unter einer Spline-Funktion ist im Folgenden eine mathematische Funktion zu verstehen, die stückweise aus Polynomen zusammengesetzt ist. Ein quintischer Spline ist eine spezielle Ausführung einer Spline-Funktion.

Nach einer Ausführungsform ist das zweite Änderungsprofil zumindest 2-fach stetig differenzierbar.

Hierdurch wird der technische Vorteil erreicht, dass bei der Änderung der Prozessgröße gemäß dem zweiten Änderungsprofil gewährleistet ist, dass sowohl die Änderung der Prozessgröße als auch die Geschwindigkeit und die Beschleunigung, mit der die Änderung der Prozessgröße bewirkt wird, einen stetigen Verlauf aufweisen. Somit können Sprünge im Verlauf der Änderung der Prozessgröße, der Geschwindigkeit oder der Beschleunigung vermieden werden.

Damit kann ein gleichmäßiger Prozessverlauf erreicht werden, in dem keine ruckartigen oder sprunghaften Änderungen der Prozessgröße oder der Geschwindigkeit oder Beschleunigung auftreten.

Nach einer Ausführungsform ist die zumindest eine Randbedingung ein Startwert der Prozessgröße, eine Startgeschwindigkeit, eine Startbeschleunigung, ein Endwert der Prozessgröße, eine Endgeschwindigkeit, eine Endbeschleunigung und eine Länge des Änderungsprofils.

Hierdurch kann gewährleistet werden, dass der Automatisierungsprozess zu bestimmten Startbedingungen beginnt und zu bestimmten Endbedingungen endet. Dies ist speziell dann von Bedeutung, wenn es sich bei dem Automatisierungsprozess um einen zyklischen Prozess handelt, bei dem der Startwert der Prozessgröße dem Endwert der Prozessgröße eines vorangegangenen Automatisierungsprozesses entspricht.

Im Folgenden wird unter Geschwindigkeit eine Änderung der Prozessgröße nach dem jeweiligen Argument verstanden. Die Geschwindigkeit lässt sich demnach durch die erste Ableitung des entsprechenden Änderungsprofils nach dem jeweiligen Argument ermitteln.

Eine Beschleunigung ist dem folgend eine Änderung der Geschwindigkeit nach dem jeweiligen Argument und lässt sich mittels der zweifachen Ableitung des jeweiligen Änderungsprofils nach dem Argument ermitteln.

Die Verwendung der Begriffe Geschwindigkeit und Beschleunigung sollen in diesem Zusammenhang nicht implizieren, dass ausschließlich Änderungen der Prozessgröße Position gegenüber dem Argument Zeit betrachtet werden. Die Begriffe Geschwindigkeit und Beschleunigung bezeichnen im Folgenden hingegen Änderungen einer beliebigen Prozessgröße gegenüber einem beliebigen Argument.

Die Länge eines Änderungsprofils ist im Folgenden durch einen Bereich des Arguments des Änderungsprofils bestimmt, in dem das Änderungsprofil definiert ist. Der Bereich des Arguments ist durch einen Startwert des Arguments, zu dem der durch das jeweilige Änderungsprofil gesteuerte Automatisierungsprozess beginnt, und einen Endwert bestimmt, zu dem der Automatisierungsprozess endet.

Ist beispielsweise für einen mit einem Änderungsprofil zu steuernden Prozess die Zeit als Argument des Änderungsprofil gewählt, beschreibt die Länge des Änderungsprofils die Zeitdauer von einem Startzeitpunkt bis zu einem Endzeitpunkt, in der der jeweilige Prozess über das Änderungsprofil gesteuert wird.

Nach einer Ausführungsform ist die zumindest eine Nebenbedingung ein Maximalwert der Prozessgröße, ein Minimalwert Prozessgröße, eine Maximalgeschwindigkeit, eine Minimalgeschwindigkeit, eine Maximalbeschleunigung, eine Minimalbeschleunigung des Verlaufs der Prozessgröße.

Hierdurch wird erreicht, dass für die Prozessgröße, für den Verlauf der Prozessgröße, inklusive der Geschwindigkeit und Beschleunigung des Verlaufs, ein Rahmen gegeben wird, innerhalb dem der Prozessverlauf problemlos und unkritisch verläuft.

Nach einer Ausführungsform ist der Maximalwert und/oder der Minimalwert der Prozessgröße eine Funktion eines Arguments eines Änderungsprofils.

Hierdurch wird eine Erhöhung der Anwendbarkeit des Verfahrens erreicht.

Nach einer Ausführungsform genügt das Rückfallprofil der zumindest einen Randbedingung und der zumindest einen Nebenbedingung und ist zumindest 2-fach stetig differenzierbar.

Hierdurch wird erreicht, dass bei Verwendung des Rückfallprofils zum Steuern des Automatisierungsprozesses gewährleistet ist, dass die zumindest eine Randbedingung und die zumindest eine Nebenbedingung, die für einen sicheren und effizienten Ablauf des Automatisierungsprozesse obligatorisch sind, eingehalten werden.

Des Weiteren kann durch die zweifach stetige Differenzierbarkeit des Rückfallprofils gesichert werden, dass sowohl der Verlauf der Prozessgröße gemäß dem Rückfallprofil als auch die Geschwindigkeit und die Beschleunigung keine Sprungstellen oder Singularitäten aufweisen. Hierdurch kann eine ruckhafte oder sprunghafte Änderung der Prozessgröße während des Verlaufs des Automatisierungsprozesses verhindert werden.

Nach einer Ausführungsform ist die Echtzeit eine harte Echtzeit.

Hierdurch kann gewährleistet werden, dass zu jedem Automatisierungsprozess, beziehungsweise vor jeder geplanten Änderung einer Prozessgröße gemäß einem Änderungsprofil, innerhalb einer vorbestimmten Zeitdauer ein entsprechendes zweites Änderungsprofil, das den entsprechenden Randbedingungen und Nebenbedingungen entspricht, oder mindestens ein entsprechendes Rückfallprofil, das ebenfalls den jeweiligen Randbedingung und Nebenbedingungen entspricht, bereitgestellt werden kann.

Unter einer harten Echtzeit ist im Folgenden eine Echtzeitanforderung zu verstehen, die besagt, dass eine Überschreitung einer zuvor bestimmten Antwortzeit als ein Versagen des jeweiligen Prozesses gewertet wird.

Nach einem zweiten Aspekt der Erfindung wird ein Automatisierungssystem mit einer Prozesseinheit zum Ausführen eines Automatisierungsprozesses und einer Steuerungseinheit zum Steuern der Prozesseinheit bereitgestellt, wobei die Steuerungseinheit ausgebildet ist, ein Verfahren zum Steuern eines Automatisierungsprozesses in Echtzeit auszuführen.

Hierdurch wird der technische Vorteil erreicht, dass ein Automatisierungssystem bereitgestellt werden kann, mittels dem in Echtzeit eine Steuerung eines Automatisierungsprozesses durchgeführt werden kann.

Nach einer Ausführungsform ist das Automatisierungssystem ein lineares Transportsystem, wobei die Prozesseinheit umfasst: zumindest eine lineare Transportvorrichtung zur Ausführung einer Transportbewegung, zumindest eine Laufschiene zur Führung der linearen Transportvorrichtung in einer vorbestimmten linearen Bahnbewegung, und eine Antriebseinheit zum Antrieb der zumindest einen linearen Transportvorrichtung auf der zumindest einen Laufschiene.

Hierdurch kann ein lineares Transportsystem bereitgestellt werden, bei dem die Steuerung jedes linearen Transportprozesses in Echtzeit durchgeführt werden kann.

Nach einer Ausführungsform ist die lineare Transportvorrichtung als ein Schlitten, insbesondere als ein Mover, ausgebildet.

Hierdurch wird der Vorteil einer Transportvorrichtung erreicht, die gesichert auf der Laufschiene geführt werden kann.

Nach einer weiteren Ausführungsform ist das Automatisierungssystem ein planares Transportsystem, wobei die Prozesseinheit umfasst: zumindest eine planare Transportvorrichtung zur Ausführung einer Transportbewegung, zumindest ein planares Bahnelement zur Führung der planaren Transportvorrichtung in einem vordefinierten zweidimensionalen Führungsbereich, in dem die planare Transportvorrichtung eine beliebige Transportbewegung ausführen kann, und eine Antriebseinheit zum Antrieb der zumindest einen planaren Transportvorrichtung auf dem zumindest einen planaren Bahnelement.

Hierdurch kann ein planares Transportsystem bereitgestellt werden, bei dem die Steuerung jedes planaren Transportprozesses in Echtzeit durchgeführt werden kann.

Nach einer Ausführungsform ist die planare Transportvorrichtung als ein planarer Schlitten, insbesondere als ein planarer Mover, ausgebildet.

Hierdurch wird der Vorteil einer planaren Transportvorrichtung erreicht, die gesichert auf den planaren Bahnelement geführt werden kann.

Nach einer Ausführungsform ist die planare Transportvorrichtung ausgebildet, eine eindimensionale, zweidimensionale oder dreidimensionale Transportbewegung auszuführen.

Hierdurch wird der Vorteil eines erhöhten Einsatzbereiches erreicht.

Nach einer Ausführungsform ist die Prozessgröße eine Position der linearen Transportvorrichtung und oder der planaren Transportvorrichtung in einem Koordinatensystem, wobei die zumindest eine Randbedingung wenigstens eine Startposition, eine Startgeschwindigkeit, eine Startbeschleunigung, eine Startrichtung eine Endposition, eine Endgeschwindigkeit, eine Endbeschleunigung und eine Endrichtung der linearen Transportvorrichtung und/oder der planaren Transportvorrichtung umfasst, und wobei die zumindest eine Nebenbedingung eine Maximalposition, eine Minimalposition, eine Maximalgeschwindigkeit, eine Minimalgeschwindigkeit, eine Maximalbeschleunigung und eine Minimalbeschleunigung der linearen Transportvorrichtung und/oder der planaren Transportvorrichtung umfasst.

Hierdurch ist eine einfache, sichere und effiziente Steuerung eines Transportprozesses des linearen oder planaren Transportsystems ermöglicht.

Nach einem dritten Aspekt wird ein Computerprogramm bereitgestellt, welches Befehle umfasst, die bei der Ausführung des Computerprogramms durch einen Computer oder die Steuerungseinheit diese veranlassen, ein Verfahren zum Steuern eines Automatisierungsprozesses in Echtzeit auszuführen.

Nach einem vierten Aspekt der vorliegenden Erfindung wird ein maschinenlesbares Speichermedium bereitgestellt, auf dem das erfindungsgemäße Computerprogramm gespeichert ist.

Die Erfindung wird im Folgenden anhand von bevorzugten Ausführungsformen näher erläutert. Hierbei zeigen:
Fig. 1 ein Ablaufdiagramm eines Verfahrens zum Steuern eines Automatisierungsprozesses in Echtzeit gemäß einer ersten Ausführungsform;
Fig. 2 ein Ablaufdiagramm eines Verfahrens zum Steuern eines Automatisierungsprozesses in Echtzeit gemäß einer weiteren Ausführungsform;
Fig. 3 ein Ablaufdiagramm eines Verfahrens zum Steuern eines Automatisierungsprozesses in Echtzeit gemäß einer weiteren Ausführungsform;
Fig. 4 ein Position-Zeit-Diagramm zur graphischen Illustration eines Verfahrensschritts des Verfahrens zum Steuern eines Automatisierungsprozesses gemäß einer Ausführungsform;
Fig. 5 ein Position-Zeit-Diagramm zur graphischen Illustration eines weiteren Verfahrensschritts des Verfahrens zum Steuern eines Automatisierungsprozesses gemäß einer Ausführungsform;
Fig. 6 ein Position-Zeit-Diagramm zur graphischen Illustration eines weiteren Verfahrensschritts des Verfahrens zum Steuern eines Automatisierungsprozesses gemäß einer Ausführungsform;
Fig. 7 ein Position-Zeit-Diagramm zur graphischen Illustration eines weiteren Verfahrensschritts des Verfahrens zum Steuern eines Automatisierungsprozesses gemäß einer Ausführungsform;
Fig. 8 ein Position-Zeit-Diagramm zur graphischen Illustration eines weiteren Verfahrensschritts des Verfahrens zum Steuern eines Automatisierungsprozesses gemäß einer Ausführungsform;
Fig. 9 ein Position-Zeit-Diagramm zur graphischen Illustration eines weiteren Verfahrensschritts des Verfahrens zum Steuern eines Automatisierungsprozesses gemäß einer Ausführungsform;
Fig. 10 ein Position-Zeit-Diagramm zur graphischen Illustration eines weiteren Verfahrensschritts des Verfahrens zum Steuern eines Automatisierungsprozesses gemäß einer Ausführungsform;
Fig. 11 ein Position-Zeit-Diagramm eines ersten Änderungsprofils gemäß dem Verfahren zum Steuern eines Automatisierungsprozesses gemäß einer Ausführungsform;
Fig. 12 ein Position-Zeit-Diagramm eines ersten Änderungsprofils gemäß dem Verfahren zum Steuern eines Automatisierungsprozesses gemäß einer Ausführungsform;
Fig. 13 eine schematische Abbildung eines Automatisierungssystems zur Durchführung eines Automatisierungsprozesses gemäß einer Ausführungsform;
Fig. 14 eine schematische Abbildung eines Automatisierungssystems zur Durchführung eines Automatisierungsprozesses gemäß einer weiteren Ausführungsform;
Fig. 15 eine perspektivische schematische Teilabbildung des Automatisierungssystems in Fig. 14;
Fig. 16 eine schematische Abbildung eines Automatisierungssystems zur Durchführung eines Automatisierungsprozesses gemäß einer weiteren Ausführungsform; und
Fig. 17 eine schematische Abbildung eines Speichermediums mit einem Computerprogramm zur Ausführung des Verfahrens zur Steuerung eines Automatisierungsprozesses.

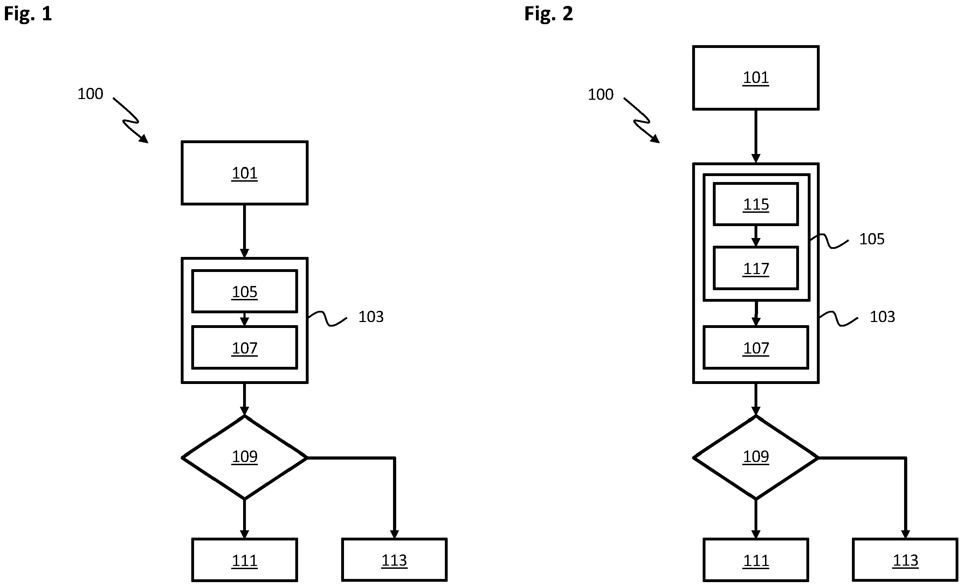

Fig. 1 zeigt ein Ablaufdiagramm des Verfahrens 100 zum Steuern eines Automatisierungsprozesses in Echtzeit gemäß einer ersten Ausführungsform, wobei das Steuern des Automatisierungsprozesses auf Basis eines Änderungsprofils P, welches im Folgenden als erstes Änderungsprofil P1, als zweites Änderungsprofil P2, als Rückfallprofil P3 und/oder allgemein als Änderungsprofil P bezeichnet wird, und zumindest einer Prozessgröße PV durchgeführt wird.

Gemäß Fig. 1 umfasst das Verfahren 100 zum Steuern eines Automatisierungsprozesses in Echtzeit die Verfahrensschritte: Ermitteln 101 eines ersten Änderungsprofils P1 mittels eines echtzeitfähigen auf einem nichtlinearen Optimierungsprozesses basierenden Erkennungsverfahrens unter Berücksichtigung zumindest einer Randbedingung BC der Prozessgröße PV, Ermitteln 103 eines zweiten Änderungsprofils P2 mittels eines numerischen Algorithmus auf Basis des ersten Änderungsprofils P1, umfassend: Anpassen 105 einer ausgewählten Anpassungsfunktion PF an das erste Änderungsprofil P1 mittels eines numerischen Anpassungsprozesses, und Identifizieren 107 der angepassten Profilfunktion PF als zweites Änderungsprofil P2, Überprüfen 109, ob das zweite Änderungsprofil P2 zumindest einer Nebenbedingung SC der Prozessgröße PV genügt, Steuern 111 des Automatisierungsprozesses auf Basis des zweiten Änderungsprofils P2, wenn das zweite Änderungsprofil P2 der zumindest einen Nebendingung SC genügt, und Steuern 113 des Automatisierungsprozesses auf Basis eines vorbestimmten Rückfallprofils P3, wenn das zweite Änderungsprofil P2 der zumindest einen Nebenbedingung SC nicht genügt.

In dem Verfahren 100 zum Steuern eines beliebigen Automatisierungsprozesses wird in einem ersten Verfahrensschritt 101 mittels eines echtzeitfähigen auf einem nichtlinearen Optimierungsprozess basierenden Erkennungsverfahrens unter Berücksichtigung zumindest einer Randbedingung BC einer Prozessgröße PV ein erstes Änderungsprofil P1 ermittelt.

Die Prozessgröße PV ist vorliegend eine physikalisch technische Größe, mittels der der jeweilige Automatisierungsprozess identifiziert, verfolgt oder gesteuert werden kann. Beispielsweise kann in einem Transportprozess, in dem eine Transportvorrichtung Transportbewegungen ausführt, die Prozessgröße PV eine Position der bewegbaren Transportvorrichtung sein.

Ein Änderungsprofil P der Prozessgröße PV beschreibt in diesem Zusammenhang die Änderung beziehungsweise den Verlauf der Prozessgröße PV in Bezug auf ein Argument X der Prozessgröße PV. Die Änderung der Prozessgröße PV kann auch den Wert Null annehmen und die Prozessgröße PV somit einen konstanten Verlauf aufweisen.

Das Argument X kann beispielsweise die Zeit sein, sodass in diesem Fall das Änderungsprofil P einen zeitlichen Verlauf der Prozessgröße PV beschreibt. Ein Änderungsprofil P kann aber auch einen Verlauf der Prozessgröße PV zu einem beliebig anderen Argument X beschreiben.

Um einen effizienten und sicheren Ablauf des Automatisierungsprozesses gewährleisten zu können, muss die Prozessgröße PV bestimmte Randbedingungen BC erfüllen. Derartige Randbedingungen BC sind vom jeweiligen Automatisierungsprozess und der jeweiligen Prozessgröße PV abhängig.

Beispielsweise können für einen Transportprozess, bei dem eine bewegbare Transportvorrichtung gesteuert wird, und bei dem die Prozessgröße PV eine Position der Transportvorrichtung in einem Koordinatensystem ist, die Randbedingungen BC Anfangspositionen und Endpositionen sowie Anfangsgeschwindigkeiten und Endgeschwindigkeiten als auch Anfangsbeschleunigungen, Endbeschleunigungen und Richtungen der Bewegung der Transportvorrichtung sein.

Zur Ermittlung eines derartigen ersten Änderungsprofils P1 wird im ersten Verfahrensschritt 101 ein echtzeitfähiges auf einem nichtlinearen Optimierungsprozess basierendes Erkennungsverfahren durchgeführt.

Während des nichtlinearen Optimierungsprozesses werden Optimierungsergebnisse eines Optimierungsproblems erstellt, die zumindest einem Optimierungskriterium, alternativ einer Mehrzahl von Optimierungskriterien, zumindest einer Randbedingung, alternativ einer Mehrzahl von Randbedingungen und zumindest einer Nebenbedingung, alternativ einer Mehrzahl von Nebenbedingungen genügen.

Die Optimierungsergebnisse des nichtlinearen Optimierungsprozesses sind vorliegend Änderungsprofile P zu verschiedenen Prozessgrößen PV und unterschiedlichen Optimierungskriterien, Randbedingungen BC und Nebenbedingungen SC.

Der nichtlineare Optimierungsprozess kann ein numerischer Anpassungsprozess sein, bei dem Parameter einer Anpassungsfunktion derart variiert werden, dass die Anpassungsfunktion den entsprechenden Optimierungskriterien, Randbedingungen und Nebenbedingungen genügt.

In einem Erkennungsprozess erkennt das echtzeitfähige auf einem nichtlinearen Optimierungsprozess basierende Erkennungsverfahren aus den zuvor durch den nichtlinearen Optimierungsprozess bestimmten Optimierungsergebnissen ein Ergebnis, das allen Optimierungskriterien, allen Randbedingungen und allen Nebenbedingungen genügt, und bestimmt diese Optimierungsergebnis als Ergebnis des Optimierungsprozess.

In anderen Worten erkennt das echtzeitfähige auf einem nichtlinearen Optimierungsprozess basierende Erkennungsverfahren aus den zuvor durch den nichtlinearen Optimierungsprozess bestimmten Änderungsprofilen P ein Änderungsprofil P, das allen Optimierungskriterien, allen Randbedingungen und allen Nebenbedingungen des jeweiligen Automatisierungsprozesses genügt, und identifiziert dieses Änderungsprofil P als erstes Änderungsprofil P1.

Für den Fall, dass kein solches Änderungsprofil P erkannt wird, das alle Optimierungskriterien, alle Randbedingungen BC und alle Nebenbedingungen SC erfüllt, wird ein Änderungsprofil P erkannt, dass wenigstens einen Teil der Optimierungskriterien, Randbedingungen BC und Nebenbedingungen SC erfüllt, und als erstes Änderungsprofil P1 identifiziert.

Hierzu können gewisse Gewichtungskriterien berücksichtigt werden, nach denen bestimmt wird, welches der Änderungsprofile P, die nicht alle Optimierungskriterien, nicht alle Randbedingungen oder nicht alle Nebenbedingungen erfüllen, als erstes Änderungsprofil P1 erkannt wird.

Der Erkennungsprozess durch das echtzeitfähige auf einem nichtlinearen Optimierungsprozess basierende Erkennungsverfahren kommt somit stets zu einem Ergebnis, auch wenn kein Änderungsprofil P erkannt wird, das allen Optimierungskriterien, allen Randbedingungen und allen Nebenbedingungen entspricht.

Da der nichtlineare Optimierungsprozess vor dem Erkennungsprozess durchgeführt und abgeschlossen ist, ist der Erkennungsprozess des echtzeitfähigen auf einem nichtlinearen Optimierungsprozess basierenden Erkennungsverfahrens echtzeitfähig.

Beispielsweise kann als echtzeitfähiges auf einem nichtlinearen Optimierungsprozess basierendes Erkennungsverfahren ein künstliches Neuronales Netz verwendet werden. Vorzugsweise kann das künstliche Neuronale Netz derart konzipiert sein, dass der nichtlineare Optimierungsprozess während eines Lernprozesses des künstlichen Neuronalen Netzes durchgeführt wird.

In einem echtzeitfähigen Erkennungsprozess erkennt das künstliche Neuronale Netz damit aus den zuvor durch den nichtlinearen Optimierungsprozess bestimmten Änderungsprofilen P ein Änderungsprofil P, das die passende Prozessgröße PV aufweist und dem für den jeweiligen Automatisierungsprozess entsprechenden Optimierungskriterium und der zumindest einen Randbedingung BC genügt, und identifiziert dieses Änderungsprofil als erstes Änderungsprofil P1.

Wird durch das künstliche Neuronale Netz kein solches Änderungsprofil P erkannt, das allen Optimierungskriterien, Randbedingungen BC und Nebenbedingungen SC genügt, erkennt das künstliche Neuronale gemäß zuvor bestimmter Gewichtungskriterien ein Änderungsprofil P, das zumindest einer Teilmenge der Optimierungskriterien, Randbedingungen BC und Nebenbedingungen SC genügt, und gibt dieses Änderungsprofil P als Ergebnis des Erkennungsprozesses als erstes Änderungsprofil P1 aus.

In Lernprozessen des künstlichen Neuronalen Netzes können weitere nichtlineare Optimierungsprozesse durchgeführt werden, um zusätzliche Änderungsprofile P zu bestimmen, die zusätzlichen und verschiedenen Optimierungskriterien, Randbedingungen und Nebenbedingungen genügen.

Je mehr Änderungsprofile P zu verschiedenen Optimierungskriterien, Randbedingungen BC, Nebenbedingungen SC, Prozessgrößen PV und anderen Parametern durch die während der Lernprozesse des künstlichen Neuronalen Netzes durchgeführten nichtlinearen Optimierungsprozesse bestimmt werden, desto besser genügen die durch das künstliche Neuronale Netz in entsprechenden Erkennungsprozessen erkannte Änderungsprofile P den jeweiligen Optimierungskriterien, Randbedingungen und Nebenbedingungen.

Der nichtlineare Optimierungsprozess ist nicht echtzeitfähig. Da der nichtlineare Optimierungsprozess aber während eines Lernprozesses des künstlichen Neuronalen Netzes durchgeführt wird und somit zu Beginn des Erkennungsprozesses durch das künstliche Neuronale Netz bereits abgeschlossen ist, ist der Erkennungsprozess des künstlichen Neuronalen Netzes echtzeitfähig.

Das künstliche neuronale Netz kann somit unter Eingabe der Prozessgröße PV und der Randbedingung BC beziehungsweise einer Mehrzahl von Randbedingungen BC und unter Berücksichtigung eines Optimierungskriteriums oder mehrerer Optimierungskriterien in Echtzeit ein optimiertes erstes Änderungsprofil P1 der Prozessgröße PV erzeugen.

Das Optimierungskriterium drückt in diesem Zusammenhang das Kriterium aus, bezüglich dessen ein bestimmter Automatisierungsprozess optimiert sein soll. Beispiele für Optimierungskriterien können sein, der Energieverbrauch oder der Materialverbrauch eines Automatisierungsprozesses, die Zeitdauer eines Prozesses oder der Verschleiß der Prozesskomponenten. Das Optimierungskriterium hängt dabei eng mit der Zielrichtung und der Art des jeweiligen Automatisierungsprozesses zusammen.

Da aufgrund der Ausgestaltung des künstlichen Neuronalen Netzes und dessen Eigenschaft, dass das Netz stets nach einer vorbestimmten Zeitdauer zu einem Ergebnis gelangt, unabhängig davon wie komplex der Optimierungsprozess ist oder wie unzureichend die Startinformationen oder der Lernzustand des Netzes sind, können die Ergebnisse des Optimierungsprozesses von unterschiedlicher Qualität sein und müssen daher überprüft werden.

In einem zweiten Verfahrensschritt 103 wird mittels eines numerischen Algorithmus auf Basis des ersten Änderungsprofils P1 ein zweites Änderungsprofil P2 ermittelt.

Hierzu wird in einem dritten Verfahrensschritt 105 eine ausgewählte Profilfunktion PF mittels eines numerischen Anpassungsprozesses an das erste Änderungsprofil P1 angepasst.

Eine Profilfunktion PF ist in diesem Zusammenhang eine mathematische Funktion, die geeignet ist, das erste Änderungsprofil P1 zu beschreiben. Beispielsweise kann eine Profilfunktion PF ein quintischer Spline sein.

Der numerische Anpassungsprozess im dritten Verfahrensschritt 105 ist im vorliegenden Zusammenhang ein Fit-Prozess, bei dem durch Variation von Parametern der Profilfunktion PF der Verlauf der Profilfunktion PF an den Verlauf des jeweiligen ersten Änderungsprofils P1 angenähert wird. Das Anpassen der ausgewählten Profilfunktion PF an das erste Änderungsprofil P1 des dritten Verfahrensschrittes 105 wird durch ein numerisches Näherungsverfahren durchgeführt. Beispielsweise kann die Anpassung durch eine Spline-Interpolation durchgeführt werden.

Während des Anpassens der ausgewählten Profilfunktion PF an das erste Änderungsprofil P1 im dritten Verfahrensschritt 105 wird berücksichtigt, dass die Profilfunktion PF die Randbedingungen BC erfüllt.

Das Anpassen der ausgewählten Profilfunktion PF an das erste Änderungsprofil P1 im dritten Verfahrensschritt 105 ergibt somit eine Profilfunktion PF, die der zumindest einen Randbedingung BC genügt und einen Verlauf aufweist, der dem des ersten Änderungsprofils P1 angenähert ist.

Der Verlauf der angepassten Profilfunktion PF stellt somit ein Änderungsprofil P dar, das die Randbedingungen BC erfüllt und nahezu den Optimierungsgrad des ersten Änderungsprofils P1 aufweist. Durch die Abweichungen der Profilfunktion PF zum ersten Änderungsprofil P1, beispielsweise in den Randbedingungen BC, erreicht die Profilfunktion PF nicht den Optimierungsgrad des ersten Änderungsprofils P1.

Der individuelle Verlauf des ersten Änderungsprofils P1 spiegelt den Optimierungsgrad des ersten Änderungsprofils P1 in Bezug auf das Optimierungskriterium oder die Optimierungskriterien wieder. Ein Profil, das diesem Verlauf entspricht, ist gegenüber dem Optimierungskriterium zu nahezu gleichem Maß optimiert, wie das erste Änderungsprofil P1.

Darauffolgend wird in einem vierten Verfahrensschritt 107 die angepasste Profilfunktion PF als ein zweites Änderungsprofil P2 identifiziert. Das zweite Änderungsprofil P2 ist folglich gemäß dem echtzeitfähigen auf einem nichtlinearen Optimierungsprozess basierenden Erkennungsverfahren bezüglich dem Optimierungskriterium optimiert und erfüllt die Randbedingungen BC.

In einem fünften Verfahrensschritt 109 wird das zweite Änderungsprofil P2 dahingehend überprüft, ob dieses zusätzlich zu den Randbedingungen BC weitere Nebenbedingungen SC erfüllt.

Diese Nebenbedingungen SC können beispielsweise ein Maximal-, Minimalwert der Prozessgröße PV, eine Maximal-, Minimalgeschwindigkeit oder eine Maximal-, Minimalbeschleunigung des Verlaufs der Prozessgröße PV sein.

Ergibt die Überprüfung im fünften Verfahrensschritt 109, dass das zweite Änderungsprofil P2 die zumindest eine Nebenbedingung SC erfüllt, so wird in einem folgenden sechsten Verfahrensschritt 111 der Automatisierungsprozess auf Basis des zweiten Änderungsprofils P2 gesteuert.

Ergibt die Überprüfung im fünften Verfahrensschritt 109 hingegen, dass das zweite Änderungsprofil P2 zumindest eine Nebenbedingung SC nicht erfüllt, die Erfüllung der Randbedingung BC ist durch das Anpassen im dritten Verfahrensschritt 105 der Profilfunktion PF ja stets gewährleistet, wird in einem nächsten siebten Verfahrensschritt 113 das zweite Änderungsprofil P2 verworfen und der Automatisierungsprozess auf Basis eines Rückfallprofils P3 gesteuert.

Das Rückfallprofil P3 ist dabei derart ausgestaltet, dass dieses sowohl die Randbedingungen BC als auch die Nebenbedingungen SC erfüllt jedoch nicht in Bezug auf das zumindest eine Optimierungskriterium optimiert ist.

Das Rückfallprofil P3 kann bezüglich der Randbedingungen BC und der Nebenbedingungen SC individuell erzeugt werden. Das Rückfallprofil P3 wird jedoch nicht mittels des echtzeitfähigen auf einem nichtlinearen Optimierungsprozess basierenden Erkennungsverfahrens ermittelt. Alternativ kann für jeden Automatisierungsprozess aber auch auf bereits erzeugte, beispielsweise in einer entsprechenden Datenbank hinterlegte, Rückfallprofile P3 zurückgegriffen werden.

Eine Steuerung des jeweiligen Automatisierungsprozesses anhand eines zweiten Änderungsprofils P2 oder eines Rückfallprofils P3 erfolgt, indem eine Prozessgröße PV dem jeweiligen Änderungsprofil P2, P3 entsprechend variiert wird.

Fig. 2 zeigt ein Ablaufdiagramm des Verfahrens 100 zum Steuern eines Automatisierungsprozesses in Echtzeit gemäß einer weiteren Ausführungsform.

Im Vergleich zu Fig. 1 unterscheidet sich das Verfahren 100 in Fig. 2 darin, dass das Anpassen der ausgewählten Profilfunktion PF an das erste Änderungsprofil P1 mittels des numerischen Anpassungsprozesses im dritten Verfahrensschritt 105 zwei weitere Verfahrensschritte aufweist.

In einem achten Verfahrensschritt 115 wird zumindest ein Datenpunkt DP des ersten Änderungsprofils P1 ermittelt.

Ein Datenpunkt DP ist in diesem Zusammenhang ein Wertepaar bestehend aus einem Wert des Arguments X und einem entsprechenden Wert der Prozessgröße PV entlang dem ersten Änderungsprofil P1.

Je nach Komplexität des ersten Änderungsprofils P1 kann auch eine Mehrzahl von Datenpunkten DP ermittelt werden, um mittels der Datenpunkte DP alle kennzeichnenden Stellen des ersten Änderungsprofils P1 berücksichtigen zu können.

In einem folgenden neunten Verfahrensschritt 117 wird die bereits erwähnte Profilfunktion PF an die Randbedingungen BC und den Datenpunkt DP, beziehungsweise die Datenpunkte DP, angepasst.

Der neunte Verfahrensschritt 117 zum Anpassen der Profilfunktion PF an die ausgewählten Datenpunkte DP und die Randbedingungen BC wird gemäß dem unter Fig. 1 im dritten Verfahrensschritt 105 beschriebenen Anpassungsprozess durchgeführt, indem beispielsweise eine Spline-Interpolation der Datenpunkte DP und der Randbedingungen BC vorgenommen wird.

Nach dem Anpassen der Profilfunktion PF an den zumindest einen Datenpunkt DP gemäß dem neunten Verfahrensschritt 117 wird das Verfahren 100 gemäß den unter Fig. 1 beschriebenen vierten Verfahrensschritt 107, fünften Verfahrensschritt 109 und sechsten Verfahrensschritt 111 oder siebten Verfahrensschritt 113 fortgesetzt.

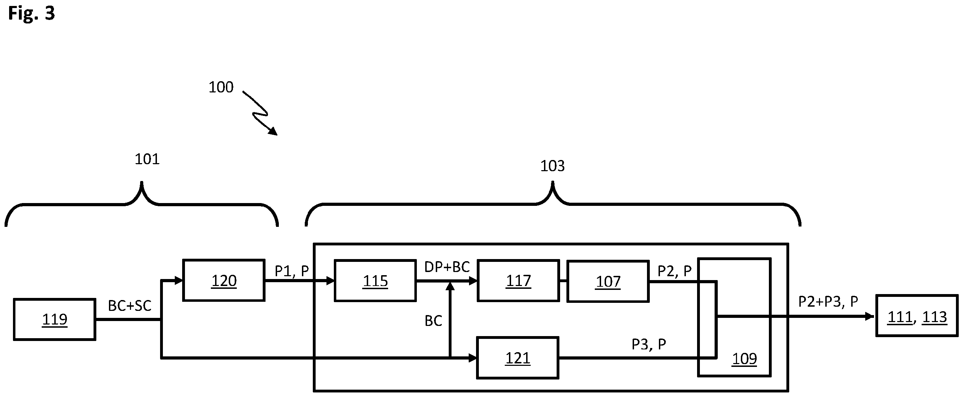

Fig. 3 zeigt ein Ablaufdiagramm des Verfahrens 100 zum Steuern eines Automatisierungsprozesses in Echtzeit gemäß einer weiteren Ausführungsform.

Abweichend von den in Fig. 1 und Fig. 2 beschriebenen Ausführungsformen weist der erste Verfahrensschritt 101 zwei weitere Verfahrensschritte auf.

Zunächst werden in einem zehnten Verfahrensschritt 119 die zumindest eine Randbedingung BC und die zumindest eine Nebenbedingung SC bestimmt.

Die Randbedingungen BC und Nebenbedingungen SC können in diesem Zusammenhang entweder von einem Nutzer des Verfahrens 100 individuell auf den jeweiligen Automatisierungsprozess und die jeweilige Prozessgröße PV angepasst und selbstständig erzeugt werden. Denkbar wäre auch, dass die jeweiligen Randbedingungen BC und Nebenbedingungen SC aus einer Datenbank entnommen werden. Ebenfalls wäre möglich, dass das Verfahren 100 genannte Randbedingungen BC und Nebenbedingungen SC unter Kenntnis des Automatisierungsprozesses und unter Kenntnis entsprechender Eigenschaften der jeweiligen Hardwarekomponenten des Automatisierungssystems eigenständig erzeugt.

In einem elften Verfahrensschritt 120 wird mittels des echtzeitfähigen auf einem nichtlinearen Optimierungsprozess basierenden Erkennungsverfahrens unter Berücksichtigung der Randbedingungen BC und der Nebenbedingungen SC ein erstes Änderungsprofil P1 erstellt.

Im Folgenden wird in dem achten Verfahrensschritt 115 zumindest ein Datenpunkt DP des ersten Änderungsprofils P1 ermittelt, in dem neunten Verfahrensschritt 117 eine ausgewählte Profilfunktion PF an den zumindest einen Datenpunkt DP und die zumindest eine Randbedingung BC angepasst und in dem vierten Verfahrensschritt 107 die angepasste Profilfunktion PF als zweites Änderungsprofil P2 identifiziert.

Zeitlich vor oder parallel zur Bestimmung des zweiten Änderungsprofils P2 im vierten Verfahrensschritt 107 wird in einem zwölften Verfahrensschritt 121 auf Basis der Randbedingungen BC und der Nebenbedingungen SC ein Rückfallprofil P3 ermittelt.

Das Rückfallprofil P3 kann hierbei für jeden Automatisierungsprozess individuell erzeugt werden. Auch denkbar wäre, dass das Rückfallprofil P3 aus einer Mehrzahl bereits bekannter und gespeicherter Profile ausgewählt wird.

Im Folgenden wird gemäß den vorangegangenen Ausführungsformen das zweite Änderungsprofil P2 hinsichtlich der Erfüllung der Nebenbedingungen SC im fünften Verfahrensschritt 109 überprüft und der Automatisierungsprozess entweder im sechsten Verfahrensschritt 111 mit dem zweiten Änderungsprofil P2, wenn dieses die Nebenbedingungen SC erfüllt, oder im siebten Verfahrensschritt 113 mit dem Rückfallprofil P3 gesteuert, wenn das zweite Änderungsprofil P2 den Nebenbedingungen SC nicht entspricht.

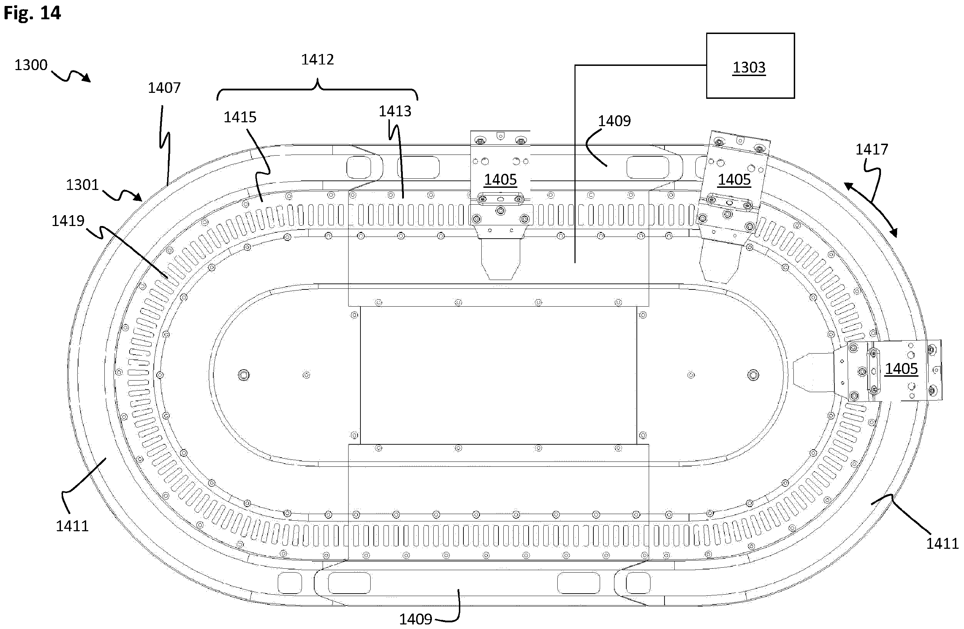

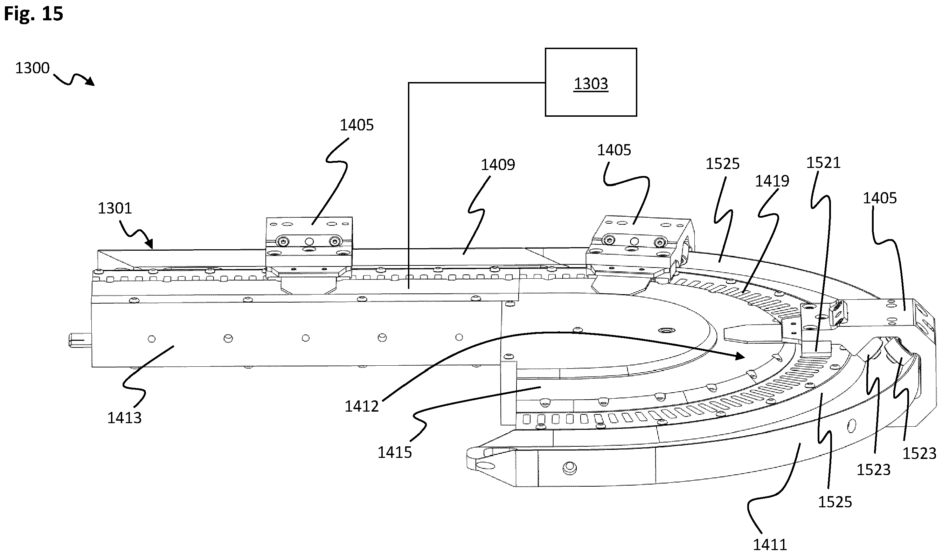

Im Folgenden wird das oben beschriebene Verfahren 100 zum Steuern eines Automatisierungsprozesses in Echtzeit anhand einer weiteren Ausführungsform nochmals näher beschrieben. In der im Folgenden dargestellten Ausführungsform ist der Automatisierungsprozess ein linearer Transportprozess, der durch ein Transportsystem wie in Fig. 14 und Fig. 15 gezeigt ist, ausgeführt wird. Hierzu ist eine lineare Transportvorrichtung 1405 entlang einer vorbestimmten Laufschiene 1407 bewegbar ausgebildet, um Transportvorgänge durchzuführen.

Als Prozessgröße PV ist in dieser Ausbildungsform die Position der lineare Transportvorrichtung 1405 innerhalb eines entsprechenden Koordinatensystems gewählt. Vorzugsweise ist die Position in Relation zu der vorbestimmten Laufschiene 1407 bestimmt, sodass durch die Prozessgröße PV die Position der linearen Transportvorrichtung 1405 auf der Laufschiene 1407 ausgedrückt ist.

Als Argument X zur Prozessgröße PV ist die Zeit gewählt. Ein Änderungsprofil P beschreibt damit den zeitlichen Verlauf der Position einer linearen Transportvorrichtung 1405 auf einer Laufschiene 1407.

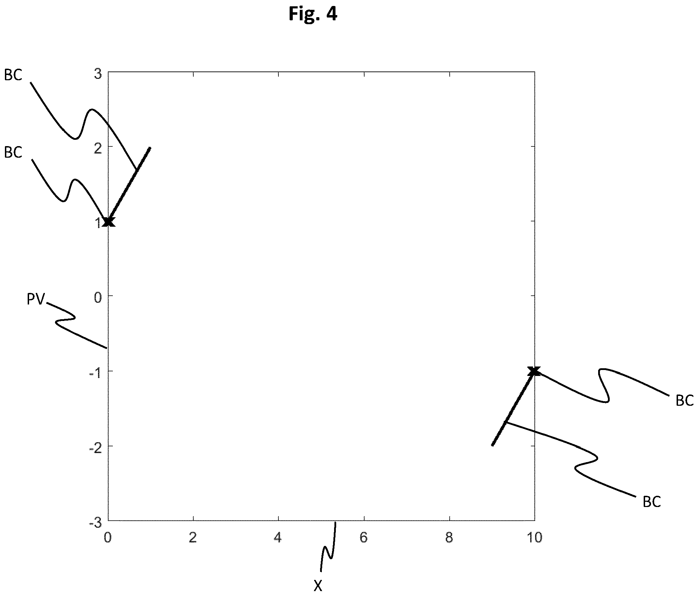

Fig. 4 bis Fig. 10 zeigen jeweils ein Position-Zeit-Diagramm zur graphischen Illustration eines Verfahrensschritts des Verfahrens 100 zum Steuern eines Automatisierungsprozesses gemäß der genannten Ausführungsform.

In Fig. 4 sind gemäß einem zehnten Verfahrensschritt 119 die Randbedingungen BC bestimmt.

In der vorliegenden Ausführungsform umfassen die Randbedingungen BC eine Startposition und eine Endposition der linearen Transportvorrichtung 1405. Die Start- und Endpositionen sind durch jeweils ein Kreuz zu den Argumentwerten X=0 und X=10 dargestellt, wobei die Argumentwerte X=0 und X=10 vorliegend Beginn und Ende des Transportprozesses symbolisieren.

Ferner umfassen die Randbedingung BC eine Startdynamik und eine Enddynamik, die jeweils durch eine in der Startposition beginnenden beziehungsweise in der Endposition endenden geraden Linie gekennzeichnet sind.

Die Start- und Enddynamik umfassen jeweils Start- und Endgeschwindigkeiten und Start- und Endbeschleunigungen sowie die Richtung der Bewegung der linearen Transportvorrichtung 1405.

Die Start- und Endgeschwindigkeiten lassen sich aus den Steigungen der geraden durchgezogenen Linien ermittelt.

Die Start- und Endbeschleunigungen lassen sich aus den Krümmungen der geraden durchgezogenen Linien bestimmen.

Die Start- und Endrichtungen ergeben sich aus der Steigung der durchgezogenen Linien, wobei eine positive Steigung eine Bewegung eine erste Richtung und eine negative Steigung eine Bewegung in eine der ersten Richtung entgegengesetzte zweite Richtung beschreibt.

In der in Fig. 4 gezeigten Ausführungsform sind die Start- und Endgeschwindigkeiten identisch, was durch die Parallelität der jeweiligen Linien deutlich ist, und weisen einen von Null verschiedenen konstanten Wert auf. Die Start- und Endbeschleunigungen nehmen demzufolge den Wert Null an. Bei der hier beschriebenen Bewegung handelt sich um eine gleichförmige, nichtbeschleunigte Bewegung.

Vorliegend ist somit ein Transportprozess beschrieben, in dem zu Beginn des Prozesses und an dessen Ende, die lineare Transportvorrichtung 1405 bereits und weiterhin in Bewegung ist. Der hier beschriebene Prozess ist demnach als ein Teilprozess zu verstehen, in dem nur ein Teil der Transportbewegung der linearen Transportvorrichtung 1405 gesteuert wird.

Die hier dargestellten Geschwindigkeiten und Beschleunigungen dienen jedoch ausschließlich illustrativen Zwecken und beschreiben keine reale Bewegung einer linearen Transportvorrichtung 1405 auf einer Laufschiene.

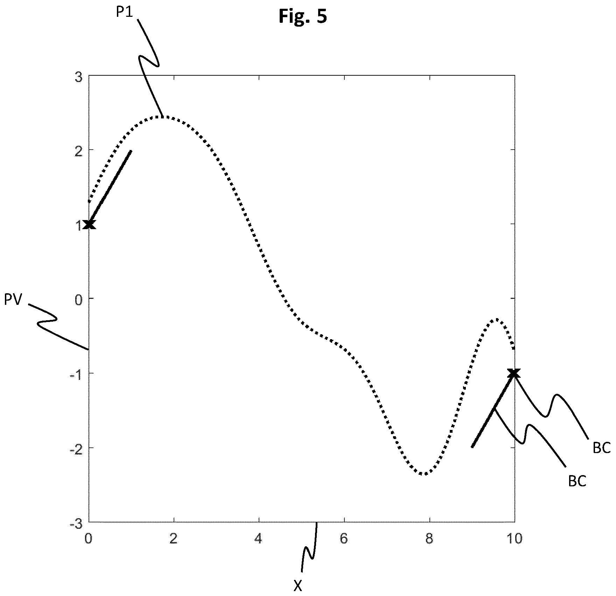

In Fig. 5 ist gemäß einem ersten Verfahrensschritt 101 mittels des echtzeitfähigen auf einem nichtlinearen Optimierungsprozess basierenden Erkennungsverfahrens ein erstes Änderungsprofil P1 ermittelt. In der dargestellten Ausführungsform ist das echtzeitfähige auf einem nichtlinearen Optimierungsprozess basierende Erkennungsverfahren durch ein künstliches Neuronales Netz realisiert, in dessen Lernprozess ein nichtlinearer Optimierungsprozess durchgeführt wird.

Das erste Änderungsprofil P1 ist durch die gepunktete Kurve dargestellt und beschreibt den zeitlichen Verlauf der Position der linearen Transportvorrichtung 1405 auf der Laufschiene 1407 von Anfang bis Ende des zu steuernden Transportprozesses.

Der Verlauf des ersten Änderungsprofils P1 drückt den Optimierungsgrad des ersten Änderungsprofils P1 in Bezug auf bestimmte Optimierungskriterien aus, gemäß denen das echtzeitfähige auf einem nichtlinearen Optimierungsprozess basierende Erkennungsverfahren zur Ermittlung des ersten Änderungsprofils P1 im ersten Verfahrensschritt 101 beziehungsweise im elften Verfahrensschritt 120 durchgeführt wurde.

Das hier dargestellte erste Änderungsprofil P1 dient jedoch lediglich zur Illustration und beschreibt keine tatsächliche Transportbewegung einer linearen Transportvorrichtung 1405. Auch ist das hier dargestellte erste Änderungsprofil P1 nicht bezüglich eines bestimmten Optimierungskriteriums optimiert. Vielmehr ist der hier dargestellte Verlauf des ersten Änderungsprofils P1 beliebig und ohne Intention gewählt, mit dem dargestellten ersten Änderungsprofil P1 eine reale Situation eines realen Automatisierungsprozesses zu beschreiben.

Ferner ist in Fig. 5 dargestellt, dass das erste Änderungsprofil P1 nicht die Randbedingungen BC erfüllt. Vorliegend erreicht das erste Änderungsprofil P1 nicht die Anfangs- und Endpositionen und weicht in der Endgeschwindigkeit ab.

Darüber hinaus weicht das erste Änderungsprofil P1 mindestens in der Endrichtung der linearen Transportvorrichtung 1405 ab. Mit Endrichtung ist die Richtung der linearen Transportvorrichtung 1405 gemeint, in der die lineare Transportvorrichtung 1405 zur Endposition gelangt.

In Fig. 5 weist das erste Änderungsprofil P1 im Startpunkt eine positive Steigung auf und beschreibt damit eine Startbewegung der linearen Transportvorrichtung 1405 in die erste Richtung. Die positive Steigung des ersten Änderungsprofils P1 im Startpunkt stimmt weitestgehend mit der Steigung der geraden Linie der Randbedingungen BC im Startpunkt überein.

Im Endpunkt weist das erste Änderungsprofil P1 hingegen eine negative Steigung auf und beschreibt damit eine Bewegung der linearen Transportvorrichtung 1405 in die zweite Richtung. Im Gegensatz dazu weist die gerade Linie der Randbedingungen BC im Endpunkt eine positive Steigung auf. Die Randbedingungen sehen damit vor, dass die lineare Transportvorrichtung 1405 in einer Bewegung in die erste Richtung zum Endpunkt gelangt.

Derartige Abweichungen des ersten Änderungsprofils P1 sind auf intrinsische Fehler echtzeitfähiger auf einem nichtlinearen Optimierungsprozess basierender Erkennungsverfahren, insbesondere künstlicher Neuronaler Netze, zurückzuführen.

Je nach Trainingsgrad des künstlichen Neuronalen Netzes können die Ergebnisse der Erkennungsprozesse besser oder schlechter den Randbedingungen BC und Nebenbedingungen SC genügen.

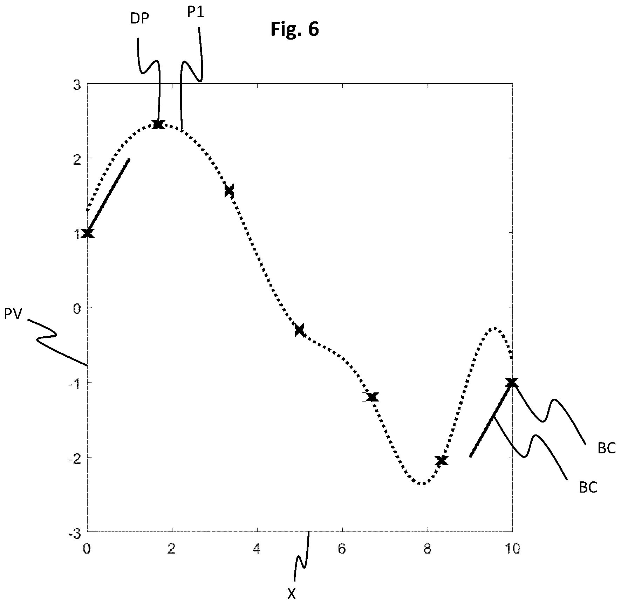

In Fig. 6 ist gemäß eines achten Verfahrensschritts 115 eine Mehrzahl von Datenpunkten DP(Kreuze) des ersten Änderungsprofils P1 (gepunktete Kurve) bestimmt.

Wie dargestellt ordnet jeder Datenpunkt DP einer bestimmten Zeit X eine dem ersten Änderungsprofil P1 entsprechende Position PV zu. Die Datenpunkte DP können individuell an beliebigen Stellen des ersten Änderungsprofils P1 bestimmt werden.

Alternativ können die Datenpunkte DP in äquidistanten Abständen gesetzt werden. Zusätzlich kann die Anzahl der Datenpunkte DP je nach Komplexität des jeweiligen ersten Änderungsprofils P1 variiert werden, um sicherstellen zu können, dass alle kennzeichnenden Stellen des ersten Änderungsprofils P1 berücksichtigt werden.

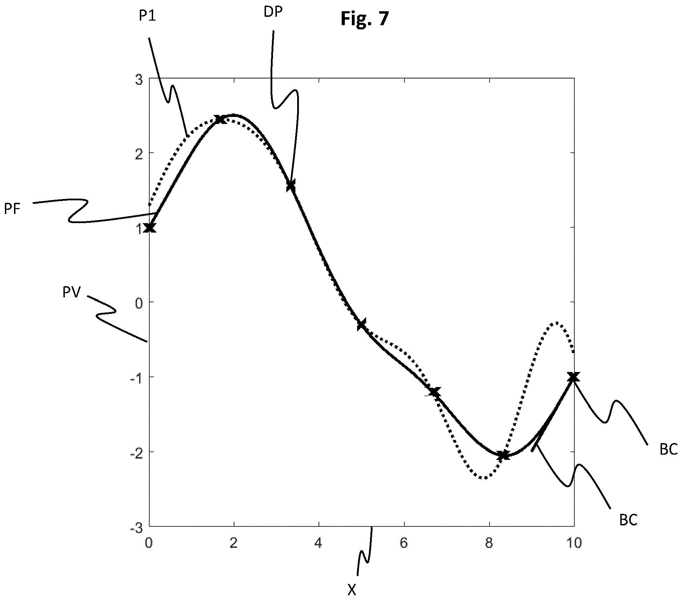

In Fig. 7 ist gemäß eines folgenden neunten Verfahrensschritts 117 eine ausgewählte Profilfunktion PF (durchgezogene Kurve) an die Datenpunkte DP (Kreuze) und die Randbedingungen BC angepasst.

In der vorliegenden Ausführungsform ist als Profilfunktion PF ein quintischer Spline gewählt und als Anpassungsprozess eine Spline-Interpolation der Datenpunkten DP und der Randbedingungen BC durchgeführt worden.

Die angepasste Profilfunktion PF erreicht alle Datenpunkte DP und erfüllt die Randbedingungen BC, was dadurch illustriert ist, dass die Profilfunktion PF in der Startposition beginnt und in der Endposition endet und in direkter Nähe zu diesen Positionen mit der die Start- und Endgeschwindigkeit darstellenden durchgezogenen Linien übereinstimmt.

Durch die jeweilige Wahl des quintischen Splines als Profilfunktion PF ist gewährleistet, dass die Profilfunktion PF Stetigkeitsbedingungen genügt, die besagen, dass die Profilfunktion PF, beziehungsweise das zweite Änderungsprofil P2, zumindest 2-fach stetig differenzierbar sind.

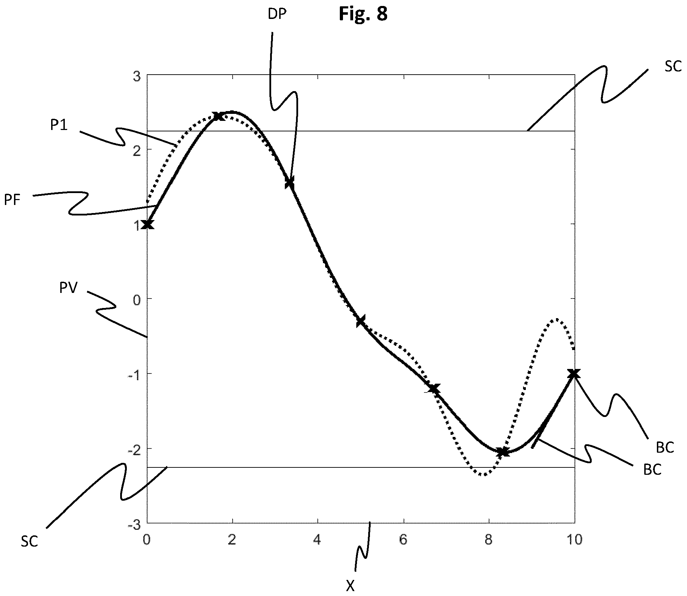

In Fig. 8 ist ferner eine Nebenbedingung SC dargestellt.

Als Nebenbedingungen SC ist in Fig. 8 ein Positionslimit, sprich eine maximale und minimale Position der linearen Transportvorrichtung 1405 auf der Laufschiene 1407, bestimmt. Die Nebenbedingung SC ist durch die zwei waagerechten parallelen Linien gekennzeichnet.

In dem beschriebenen linearen Transportprozess können jedoch auch weitere Nebenbedingungen SC berücksichtigt werden, die in den Figuren nicht dargestellt sind. Genauso können auch weitere Randbedingungen BC, die vorliegend nicht dargestellt oder diskutiert sind, von Bedeutung sein.

Beispielsweise können als Nebenbedingungen SC neben den Maximal- und Minimalpositionen, Maximal- und Minimalgeschwindigkeiten oder Maximal- und Minimalbeschleunigungen der linearen Transportvorrichtung 1405 Berücksichtigung finden.

Die Nebenbedingungen SC können durch die Ausgestaltung des Prozessaufbaus, insbesondere durch die körperlichen Grenzen oder durch die Maximalbelastungen oder andere Eigenschaften der Prozesskomponenten, mittels derer der Prozess durchgeführt wird, bedingt sein. Auch die jeweilige Durchführung des Prozesses können entsprechende Nebenbedingungen SC beeinflussen.

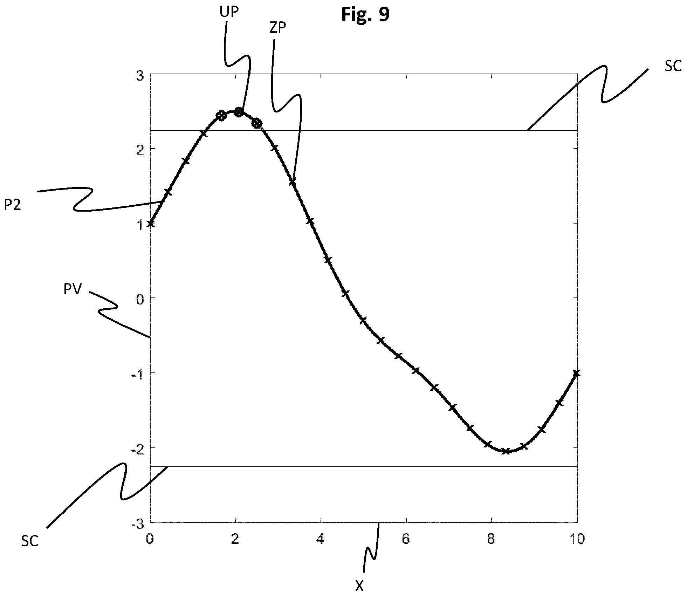

In Fig. 9 ist gemäß dem vierten Verfahrensschritt 107 die angepasste Profilfunktion PF als zweites Änderungsprofil P2 identifiziert.

Ferner ist gemäß einem folgenden fünften Verfahrensschritt 109 geprüft, ob das zweite Änderungsprofil P2 der Nebenbedingungen SC genügt.

In Fig. 9 ist dargestellt, dass das zweite Änderungsprofil P2 der Nebenbedingung SC der minimalen Position entspricht, indem das zweite Änderungsprofil P2 die untere waagerecht Linie, die das minimale Positionslimit darstellt, nicht unterschreitet.

Das zweite Änderungsprofil P2 verletzt jedoch die Nebenbedingung SC des maximalen Positionslimits, indem das zweite Änderungsprofil P2 die durch die obere waagerechte Linie dargestellte maximale Position überschreitet. Das zweite Änderungsprofil P2 sieht demnach unzulässige Positionen UP der linearen Transportvorrichtung 1405 vor, die jenseits des maximalen Positionslimits der Nebenbedingungen SC liegen würden.

Die kreisförmigen Punkte kennzeichnen die durch das zweite Änderungsprofil P2 bestimmten unzulässigen Positionen UP der linearen Transportvorrichtung 1405, die gemäß der Nebenbedingung SC unzulässig sind, da diese jenseits des Positionslimits angeordnet sind. Die kreuzförmigen Markierungen kennzeichnen hingegen die durch das zweite Änderungsprofil P2 bestimmten zulässigen Positionen ZP, die gemäß der Nebenbedingung SC zulässig sind.

Die Überprüfung des zweiten Änderungsprofils P2 kommt folglich zu dem Ergebnis, dass das zweite Änderungsprofil P2 den Nebenbedingungen SC nicht genügt.

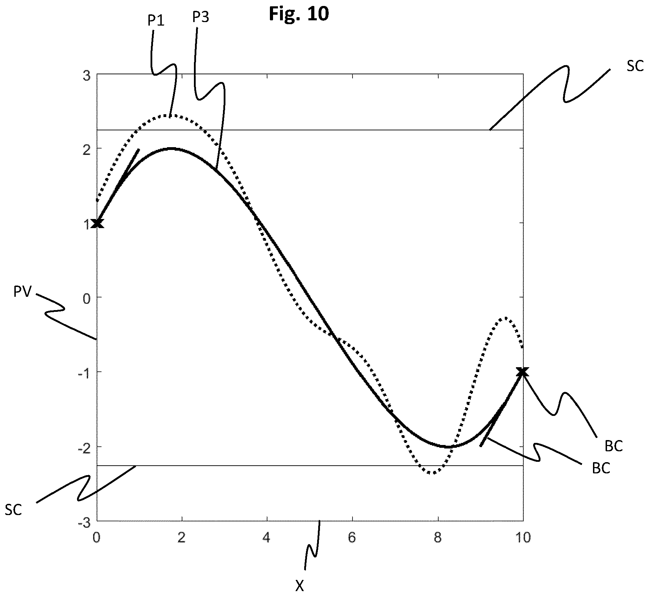

In Fig. 10 ist gemäß einem siebten Verfahrensschritt 113 das zweite Änderungsprofil P2 verworfen und das Steuern des linearen Transportprozesses findet gemäß einem Rückfallprofil P3 statt.

Wie in Fig. 10 dargestellt, entspricht das Rückfallprofil P3, dargestellt als durchgezogene Kurve, sowohl den Randbedingungen BC als auch den Nebenbedingungen SC. Das Rückfallprofil P3 startet und endet in den jeweiligen Start- und Endpositionen und weist in diesen einen geradlinigen Verlauf mit einer Steigung auf, die den Start- und Endgeschwindigkeiten entspricht. Darüber hinaus bleibt das Rückfallprofil P3 innerhalb der Positionslimits.

Das Rückfallprofil P3 ist jedoch nicht dem ersten Änderungsprofil P1 (gepunktete Kurve) und dem zweiten Änderungsprofilen P2 entsprechend in Bezug auf die Optimierungskriterien optimiert. Dies ist dadurch verdeutlicht, dass der Verlauf des Rückfallprofils P3 zwar grob dem optimierten ersten Änderungsprofil P1 folgt, in Einzelheiten jedoch substantiell vom ersten Änderungsprofil P1 abweicht.

Die Steuerung des linearen Transportprozesses gemäß dem Rückfallprofil P3 erfolgt, indem eine Antriebseinheit eines entsprechenden linearen Transportsystem angesteuert wird, eine lineare Transportvorrichtung 1405 des Transportsystems derart anzutreiben, dass die lineare Transportvorrichtung 1405 zu bestimmten Zeitpunkten gemäß dem Rückfallprofil P3 entsprechende Positionen auf einer Laufschiene 1407 des linearen Transportsystems einnimmt. Eine Steuerung des linearen Transportprozesses gemäß einem zweiten Änderungsprofils P2 erfolgt in vergleichbarer Weise.

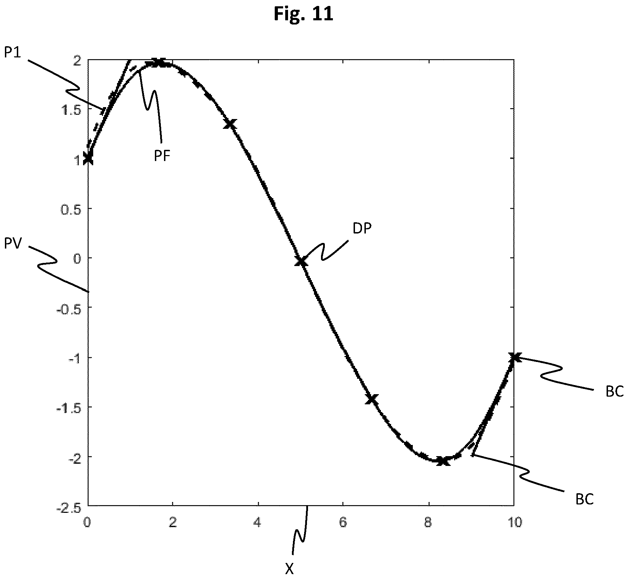

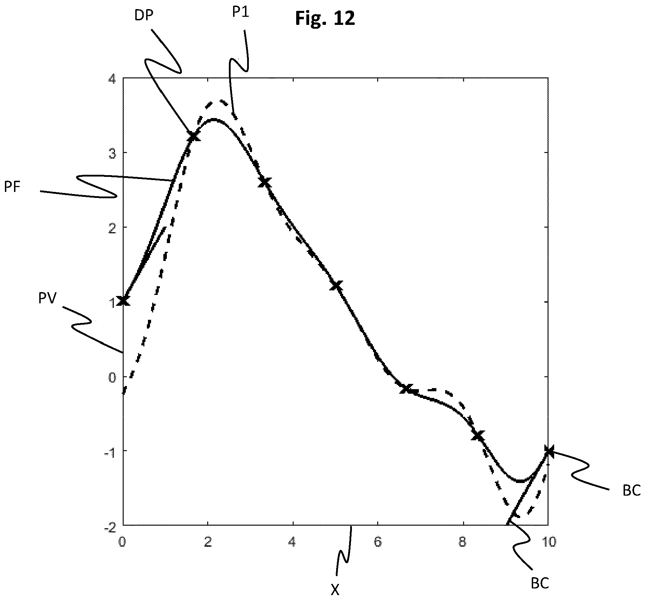

Fig. 11 und Fig. 12 zeigen jeweils ein Position-Zeit-Diagramm eines ersten Änderungsprofils P1 des Verfahrens 100 zum Steuern eines Automatisierungsprozesses gemäß einer Ausführungsform.

Die Optimierung des ersten Änderungsprofils P1 zeigt sich, wie oben bereits erwähnt, im jeweiligen Verlauf des ersten Änderungsprofils P1. Ein Änderungsprofil P, dessen Verlauf von diesem optimierten Verlauf abweicht, kann zwar einen Prozessverlauf des Automatisierungsprozesses darstellen, aber keinen optimierten Prozessverlauf.

In Fig. 11 und Fig. 12 ist jeweils ein Ergebnis eines echtzeitfähigen auf einem nichtlinearen Optimierungsprozess basierenden Erkennungsverfahrens mit einem künstlichen Neuronalen Netz dargestellt, wobei Fig. 11 ein erstes Änderungsprofil P1 (gestrichelte Kurve), das durch ein gut trainiertes künstliches Neuronales Netz ermittelt wurde, und Fig. 12 ein erstes Änderungsprofil P1 mittels einer gestrichelte Kurve darstellt, das durch ein schlecht trainiertes künstliches Neuronales Netz ermittelt wurde.

In Fig. 11 weist das erste Änderungsprofil P1 eine lediglich geringfügige Abweichung von den Randbedingungen BC auf. Die Startposition und Startgeschwindigkeit werden leicht verfehlt, während die Endposition und Endgeschwindigkeit erreicht werden.

Auch die Stetigkeitsbedingungen werden erfüllt. Insgesamt weicht die angepasste Profilfunktion PF (durchgezogenen Kurve) nur geringfügig vom ersten Änderungsprofil P1 (gestrichelte Kurve) ab.

In Fig. 12 weist das erste Änderungsprofil P1 hingegen eine substantielle Abweichung von den Randbedingungen BC auf. Sowohl in den Start- und Endpositionen als auch in den Start- und Endgeschwindigkeiten weist das erste Änderungsprofil P1 starke Abweichungen auf. Auch die angepasste Profilfunktion PF, dargestellt als (durchgezogenen Kurve), ist lediglich im Mittelbereich in der Lage, das erste Änderungsprofil P1 gut zu repräsentieren.

Bei derartig unzureichenden Ergebnissen, wie diese in Fig. 12 dargestellt sind, müsste das entsprechende künstliche Neuronale Netz, beziehungsweise das echtzeitfähige auf einem nichtlinearen Optimierungsprozess basierende Erkennungsverfahren, veranlasst werden, weitere Trainingsdurchläufe beziehungsweise Lernprozesse zu absolvieren, um in folgenden Erkennungsverfahren bessere Ergebnisse zu liefern.

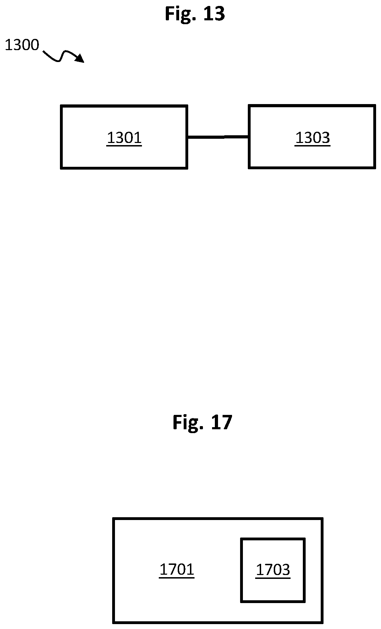

Fig. 13 zeigt eine schematische Abbildung eines Automatisierungssystems 1300 zur Durchführung eines Automatisierungsprozesses.

Das Automatisierungssystem 1300 weist eine Prozesseinheit 1301 zum Ausführen des Automatisierungsprozesses und eine Steuerungseinheit 1303 zum Steuern der Prozesseinheit 1301 auf.

Die Prozesseinheit 1301 kann dem jeweiligen Automatisierungsprozess entsprechende Prozesskomponenten aufweisen.

Beispielsweise kann das Automatisierungssystem 1300 ein lineares Transportsystem sein. Die Prozesseinheit 1301 könnte diesbezüglich zumindest eine bewegbare lineare Transportvorrichtung 1405, zumindest eine Laufschiene 1407 zur Führung der linearen Transportvorrichtung 1405 und zumindest eine Antriebseinheit 1412 zum Antrieb der linearen Transportvorrichtung 1405 umfassen.

Fig. 14 zeigt eine schematische Abbildung des Automatisierungssystems 1300 zur Durchführung eines Automatisierungsprozesses gemäß einer weiteren Ausführungsform.

In der vorliegenden Ausführungsform ist das Automatisierungssystem 1300 als ein lineares Transportsystem ausgebildet.

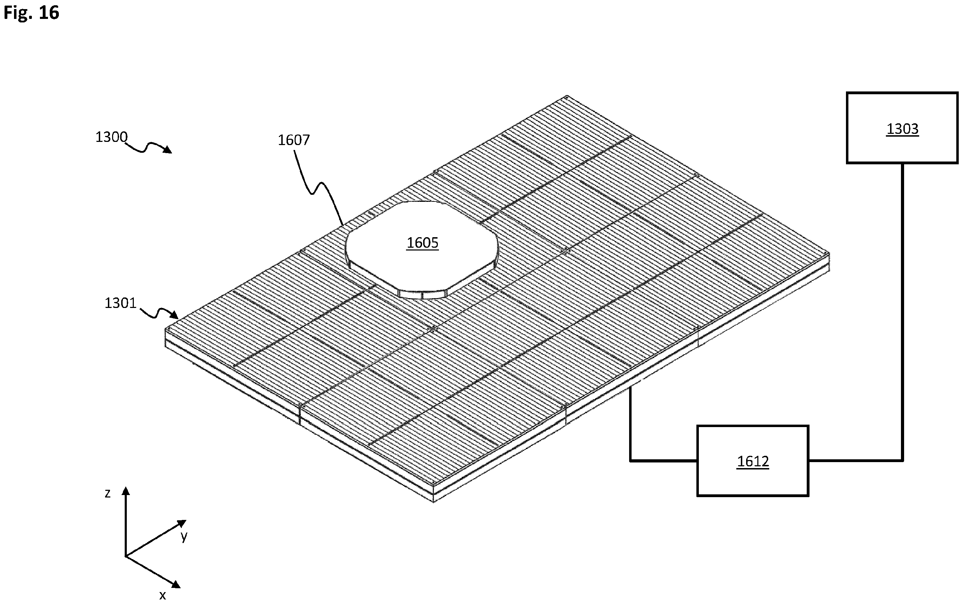

Es wird darauf hingewiesen, dass die Fig. 14 und folgend auch die Fig. 15 und Fig. 16 lediglich schematischer Natur und nicht maßstabsgetreu sind. In diesem Sinne können in den Figuren gezeigte Komponenten und Elemente zum besseren Verständnis übertrieben groß oder verkleinert dargestellt sein. Ferner wird darauf hingewiesen, dass die Bezugszeichen in den Figuren unverändert gewählt worden sind, wenn es sich um gleich ausgebildete Elemente und/oder Komponenten und/oder Größen handelt.

Das lineare Transportsystems 1300 in Fig. 14 umfasst eine Prozesseinheit 1301 und eine mit der Prozesseinheit 1301 verbundene Steuerungseinheit 1303.

Die Prozesseinheit 1301 umfasst beispielsweise drei lineare Transportvorrichtungen 1405 und eine Laufschiene 1407, auf der die linearen Transportvorrichtungen 1405 angeordnet sind.

Die Laufschiene 1407 kann als geschlossene Bahn ausgebildet sein, die zwei gekrümmte Laufschienenabschnitte, im Folgenden auch als gekrümmte Laufschiene 1411 bezeichnet, und zwei gerade Laufschienenabschnitte, im Folgenden auch als gerade Laufschiene 1409 bezeichnet, aufweist. Mittels der Laufschiene können die linearen Transportvorrichtungen 1405 entlang einer Laufrichtung 1417 geführt werden.

Darüber hinaus umfasst die Prozesseinheit 1301 eine Antriebseinheit 1412, die in der vorliegenden Ausführungsform als gerade Motormodule 1413 und bogenförmige Motormodule 1415 ausgebildet ist. Die Geometrie der geraden Motormodule 1413 und/oder der bogenförmigen Motormodule 1415 kann beliebig variiert und kombiniert werden, ebenso wie die Kontur der gekrümmten Laufschiene 1411 und/oder geraden Laufschiene 1409.

Die geraden Motormodule 1413 und die bogenförmigen Motormodule 1415 sind als Linearmotoren ausgebildet. Diese Linearmotoren weisen eine Mehrzahl von Statorzähnen 1419 auf, wobei zumindest um einen Teil der Statorzähne 1419 nicht dargestellte elektrische Spulen gewickelt sind, welche einzeln und getrennt voneinander bestrombar sind.

Mittels der Spulen kann ein magnetisches Wanderfeld erzeugt werden, mittels dem die linearen Transportvorrichtungen 1405 entlang der Laufschiene 1407 bewegbar sind.

Die Steuerungseinheit 1303 ist mit der Prozesseinheit 1301 verbunden und dient dazu, die Bewegung der linearen Transportvorrichtungen 1405 auf der Laufschiene 1407 zu steuern.

Beispielsweise kann die Bewegung einer linearen Transportvorrichtung 1405 mittels eines wie oben beschriebenen Änderungsprofils P mit der Position der linearen Transportvorrichtung 1405 als Prozessgröße PV, vergleichbar zu den in den Fig. 4 bis Fig. 12 beschriebenen Änderungsprofilen P, gesteuert werden.

Die in den Änderungsprofilen P beschriebenen Positionen entsprechen damit vorliegend Positionen einer jeweiligen linearen Transportvorrichtung 1405 auf der Laufschiene 1407. Mittels einer Sensoreinheit, in Fig. 14 nicht dargestellt, können diese Positionen ermittelt und mittels der geraden Motormodule 1413 und/oder bogenförmigen Motormodule 1415 exakt umgesetzt werden.

Die Steuerung einer linearen Transportvorrichtung 1405 durch die Steuerungseinheit 1303 gemäß einem ermittelten Änderungsprofil P erfolgt demzufolge derart, dass die Steuerungseinheit 1303 die gerade Motormodule 1413 und/oder bogenförmige Motormodule 1415 derart ansteuert, den linearen Transportvorrichtungen 1405 sukzessive zu den durch das Änderungsprofil P bestimmten Positionen auf der Laufschiene 1407 anzufahren und so eine Transportbewegung auszuführen, die dem Verlauf des jeweiligen Änderungsprofils P entspricht.

Um Kollisionen mehrerer linearer Transportvorrichtungen 1405 auf der Laufschiene 1407 zu vermeiden, kann die Steuerungseinheit 1303 bei der Ermittlung geeigneter Änderungsprofile P für eine lineare Transportvorrichtung 1405 das Vorhandensein und die Bewegung weiterer linearer Transportvorrichtungen 1405 berücksichtigen. Dies kann beispielsweise durch entsprechende Randbedingungen BC und/oder Nebenbedingungen SC realisiert werden.

Beispielsweise können Maximalgeschwindigkeiten der einzelnen linearen Transportvorrichtungen 1405 derart angepasst sein, dass ein Auffahren einer schnelleren linearen Transportvorrichtung 1405 auf einen voranfahrenden langsameren linearen Transportvorrichtungen 1405 vermieden wird. Beispielsweise können auch negative Geschwindigkeiten und damit verbundenes Rückwärtsfahren der linearen Transportvorrichtungen 1405 durch entsprechende Nebenbedingungen SC unterbunden sein.

Neben anderen linearen Transportvorrichtungen 1405 können auch Bewegungen eines zu transportierenden Guts in der Steuerung der linearen Transportvorrichtung 1405 durch ein entsprechendes Änderungsprofil P berücksichtigt werden. Beispielsweise kann die Bewegung einer linearen Transportvorrichtung 1405 auf der Laufschiene 1407 derart auf die Bewegung eines zu transportierenden Guts, das sich auf einer separaten und in Fig. 14 nicht dargestellten Bahn bewegt, synchronisiert sein, dass lineare Transportvorrichtungen 1405 und das zu transportierende Gut zu gleichen Zeiten an einem Aufnahmeort eintreffen, an dem die lineare Transportvorrichtung 1405 das zu transportierende Gut aufnimmt und von dort aus zu einem Abgabeort transportiert.

Ein wie in den Fig. 4 bis Fig. 12 dargestelltes Änderungsprofil P zur Steuerung einer linearen Transportvorrichtung 1405 kann eine Bewegung der linearen Transportvorrichtung 1405 entlang der vollständigen Laufschiene 1407 beschreiben, sodass die lineare Transportvorrichtung 1405 einen ganzen Umlauf entlang der Laufschiene 1407 absolviert. Ein entsprechendes Änderungsprofil P kann aber auch mehrere Umläufe der linearen Transportvorrichtung 1405 beschreiben. Alternativ kann ein entsprechendes Änderungsprofil P auch nur eine Bewegung einer linearen Transportvorrichtung 1405 entlang eines Teilabschnitts der Laufschiene 1407 beschreiben, sodass für einen vollständigen Umlauf der linearen Transportvorrichtung 1405 mehrere Änderungsprofile P zeitlich nacheinander ausgeführt werden müssten.

Mittels der Steuereinheit 1303 und entsprechend aufeinander abgestimmter Änderungsprofile P können die linearen Transportvorrichtungen 1405 einzeln, in einer Gruppe von mehreren linearen Transportvorrichtungen 1405 frei oder synchron bewegt werden. Damit sind die linearen Transportvorrichtungen 1405 des linearen Transportsystems 1300 flexibel für verschiedene Positionier- beziehungsweise Transportaufgaben einsetzbar.

Fig. 15 zeigt eine perspektivische Seitenteilansicht des linearen Transportsystems 1300 in Fig 14.

Dargestellt sind eine gerade Laufschiene 1409 sowie eine gekrümmte Laufschiene 1411 und drei linearen Transportvorrichtungen 1405, wobei die Anzahl der linearen Transportvorrichtungen 1405, wie in Fig. 14, beliebig gewählt ist und auch von der dargestellten Anzahl abweichen kann.

Die Antriebseinheit 1412 umfasst ein bogenförmiges Motormodul 1415 und ein gerades Motormodul 1413.

Die an den linearen Transportvorrichtungen 1405 angeordneten Magneten 1521 können in Verbindung mit dem zu Fig. 14 beschriebenen, mittels der Spulen erzeugten, magnetischen Wanderfeld angetrieben werden, ohne dass es weiterer aktiver Antriebselemente auf den linearen Transportvorrichtungen 1405 bedarf.

Der Stromfluss in den Spulen erzeugt das magnetische Wanderfeld für eine Wirkverbindung mit den Magneten 1521 der linearen Transportvorrichtungen 1405. Eine Wirkverbindung beschreibt eine Wechselwirkung des magnetischen Wanderfeldes der Spulen mit den Magneten 1521 der linearen Transportvorrichtungen 1405, wodurch diese entlang der gekrümmten Laufschiene 1411 beziehungsweise geraden Laufschiene 1409 bewegt werden.

Über die individuelle Ansteuerung der Spulen kann somit jede lineare Transportvorrichtung 1405 des als lineares Transportsystem ausgebildeten Automatisierungssystems 1300 einzeln angesteuert werden. Es sind damit individuelle Bewegungen einzelner linearer Transportvorrichtungen 1405 wie auch synchrone Bewegungen mehrerer linearer Transportvorrichtungen 1405 möglich.

Zur Führung der linearen Transportvorrichtungen 1405 auf der Laufschiene 1407 kann jede lineare Transportvorrichtung 1405 jeweils eine Mehrzahl von Rollen 1523 aufweisen, die auf entsprechenden Laufflächen 1525 der Laufschiene 1407 abrollen können.

Die Steuerungseinheit 1303 kann eine integrierte Steuerungseinheit oder eine externe Steuerungseinheit sein. Ferner kann die Steuerungseinheit eine Rechnereinheit, ein Personal-Computer, ein Laptop oder eine entsprechende Applikation sein.

Alternativ kann das Automatisierungssystem 1300 auch ein planares Transportsystem sein.

Fig. 16 zeigt eine schematische Abbildung des Automatisierungssystems 1300 zur Durchführung eines Automatisierungsprozesses gemäß einer weiteren Ausführungsform.

In der vorliegenden Ausführungsform ist das Automatisierungssystem 1300 als ein planares Transportsystem ausgebildet.

Das als planares Transportsystem ausgebildete Automatisierungssystem 1300 in Fig. 16 umfasst eine Prozesseinheit 1301 und eine mit der Prozesseinheit 1301 verbundene Steuerungseinheit 1303.

Die Prozesseinheit 1301 umfasst eine planare Transportvorrichtung 1605 und ein planares Bahnelement 1607, auf dem die planare Transportvorrichtung 1605 angeordnet ist.

Das planare Bahnelement 1607 beschreibt eine zweidimensionale ebene Fläche, auf der die planare Transportvorrichtung 1605 eine beliebige zweidimensionale, oder auch eindimensionale, Bewegung ausführen kann.

Die Prozesseinheit 1301 umfasst ferner eine Antriebseinheit 1612, die mit dem planaren Bahnelement 1607 verbunden ist und ausgebildet ist, die planare Transportvorrichtung 1605 zu einer Bewegung anzutreiben, wenn dieser auf dem planaren Bahnelement 1607 angeordnet ist.

Alternativ kann die Antriebseinheit auch in den Motormodulen integriert sein.

Die Prozesseinheit 1301 umfasst ferner eine Sensoreinheit, hier nicht dargestellt, die die Position der planaren Transportvorrichtung 1605 auf dem planaren Bahnelement 1607 feststellen kann.

Die Steuerungseinheit 1303 ist mit der Antriebseinheit 1612 und gegebenenfalls der Sensoreinheit verbunden, um die eindimensionale oder zweidimensionale Bewegung der planaren Transportvorrichtung 1605 auf dem planaren Bahnelement 1607 zu steuern.

Die Steuerung der planaren Transportvorrichtung 1605 auf dem planaren Bahnelement 1607 durch die Steuerungseinheit 1303 gemäß einem Änderungsprofil P verläuft analog zu dem unter Fig. 4 bis Fig. 10 und Fig. 14, Fig. 15 beschriebenen Verfahren 100.

Nach Ermittlung eines geeigneten Änderungsprofils P steuert die Steuerungseinheit 1303 die Antriebseinheit 1612 an, die planare Transportvorrichtung zu den dem jeweiligen Änderungsprofil P entsprechenden Positionen auf dem planaren Bahnelement 1607 zu bewegen.

Abweichend von dem oben beschriebenen linearen Transportprozess muss zu Steuerung der zweidimensionalen Bewegung der planaren Transportvorrichtung 1605 auf dem planaren Bahnelement 1607 im Zuge des planaren Transportprozesses die Prozessgröße PV zwei Positionskomponenten, eine x-Komponente und eine y-Komponente, aufweisen, um eine eindeutige Positionierung der planaren Transportvorrichtung 1605 auf dem planaren Bahnelement 1607 zu ermöglichen.

Alternativ kann die Prozessgröße PV auch weitere Komponenten, beispielsweise eine zusätzliche z-Komponente oder andere Komponenten zur Positionsbestimmung, aufweisen.

Als Prozessgröße PV kann aber auch hier wiederum eine andere Größe als die Position der planaren Transportvorrichtung 1605 gewählt werden.

Fig. 17 zeigt eine schematische Abbildung eines Speichermediums 1701 mit einem Computerprogramm 1703 zur Ausführung des Verfahrens 100 zur Steuerung eines Automatisierungsprozesses.

### Bezugszeichenliste

- 100: Verfahren zum Steuern eines Automatisierungsprozesses
- 101: Ermitteln eines ersten Änderungsprofils
- 103: Ermitteln eines zweiten Änderungsprofils
- 105: Anpassen einer Profilfunktion an erstes Änderungsprofil
- 107: Identifizieren der Profilfunktion als zweites Änderungsprofil
- 109: Überprüfen des zweiten Änderungsprofils
- 111: Steuern anhand des zweiten Änderungsprofils
- 113: Steuern anhand des Rückfallprofils
- 115: Ermitteln eines Datenpunkts
- 117: Anpassen der Profilfunktion an Datenpunkt
- 119: Bestimmen der zumindest einen Randbedingung und der zumindest einen Nebenbedingung
- 120: Ermitteln des ersten Änderungsprofils unter Berücksichtigung der zumindest einen Randbedingung und der zumindest einen Nebenbedingung
- 121: Ermitteln des Rückfallprofils

- P: Änderungsprofil
- P1: erstes Änderungsprofil
- P2: zweites Änderungsprofil
- P3: Rückfallprofil
- PV: Prozessgröße
- X: Argument
- BC: Randbedingung
- SC: Nebenbedingung
- DP: Datenpunkt
- PF: Profilfunktion
- ZP: zulässige Position
- UP: unzulässige Position

- 1300: Automatisierungssystem
- 1301: Prozesseinheit
- 1303: Steuerungseinheit

- 1405: lineare Transportvorrichtung
- 1407: Laufschiene
- 1409: gerade Laufschiene
- 1411: gekrümmte Laufschiene
- 1412: Antriebseinheit
- 1413: gerades Motormodul
- 1415: bogenförmiges Motormodul
- 1417: Laufrichtung
- 1419: Statorzahn

- 1521: Magnet
- 1523: Rolle
- 1525: Lauffläche

- 1605: planare Transportvorrichtung
- 1607: planares Bahnelement
- 1612: Antriebseinheit

- 1701: Speichermedium
- 1703: Computerprogramm

## Patentansprüche

1. Verfahren (100) zum Steuern eines Automatisierungsprozesses in Echtzeit auf Basis zumindest eines Änderungsprofils (P) zumindest einer Prozessgröße (PV), wobei ein Änderungsprofil (P) einen Verlauf der Prozessgröße (PV) bezüglich eines Arguments (X) des Prozessgröße (PV) beschreibt, die Verfahrensschritte umfassend:
Ermitteln (101) eines ersten Änderungsprofils (P1) mittels eines echtzeitfähigen auf einem nichtlinearen Optimierungsprozess basierenden Erkennungsverfahrens unter Berücksichtigung zumindest einer Randbedingung (BC) der Prozessgröße (PV), wobei das echtzeitfähige auf einem nichtlinearen Optimierungsprozess basierende Erkennungsverfahren durch ein künstliches neuronales Netz realisiert ist, und wobei ein nichtlinearer Optimierungsprozess in einem Lernprozess des künstlichen Neuronalen Netz durchgeführt wird;
Ermitteln (103) eines zweiten Änderungsprofils (P2) mittels eines numerischen Algorithmus auf Basis des ersten Änderungsprofils (P1), umfassend:
Anpassen (105) einer ausgewählten Profilfunktion (PF) an das erste Änderungsprofil (P1) mittels eines numerischen Anpassungsprozesses, wobei während des Anpassens (105) der Profilfunktion (PF) an das erste Änderungsprofil (P1) berücksichtigt wird, dass die Profilfunktion (PF) die Randbedingung (BC) erfüllt; und
Identifizieren (107) der angepassten Profilfunktion (PF) als zweites Änderungsprofil (P2);
Überprüfen (109), ob das zweite Änderungsprofil (P2) zumindest einer Nebenbedingung (SC) der Prozessgröße (PV) genügt;
Steuern (111) des Automatisierungsprozesses auf Basis des zweiten Änderungsprofils (P2), wenn das zweite Änderungsprofil (P2) der zumindest einen Nebendingung (SC) genügt; und
Steuern (113) des Automatisierungsprozesses auf Basis eines vorbestimmten Rückfallprofils (P3), wenn das zweite Änderungsprofil (P2) der zumindest einen Nebenbedingung (SC) nicht genügt.

2. Verfahren (100) nach Anspruch 1 wobei das Anpassen (105) der ausgewählten Profilfunktion (PF) an das erste Änderungsprofil (P1) des numerischen Anpassungsprozesses die Verfahrensschritte umfasst:
Ermitteln (115) von zumindest einem Datenpunkt (DP) des ersten Änderungsprofils (P1); und
Anpassen (117) der ausgewählten Profilfunktion (PF) an den zumindest einen Datenpunkt (DP) des ersten Änderungsprofils (P1) und an die zumindest eine Randbedingung (BC).

3. Verfahren (100) nach einem der vorangehenden Ansprüche, wobei der Verfahrensschritt (101) Ermitteln eines ersten Änderungsprofils (P1) den Verfahrensschritt umfasst:
Ermitteln (120) des ersten Änderungsprofils (P1) mittels eines echtzeitfähigen auf einem nichtlinearen Optimierungsprozess basierenden Erkennungsverfahrens unter Berücksichtigung der zumindest einen Randbedingung (BC) und der zumindest einen Nebenbedingung (SC).

4. Verfahren (100) nach einem der vorangehenden Ansprüche, ferner den Verfahrensschritt umfassend:
Erzeugen (121) des Rückfallprofils (P3), wobei das Rückfallprofil (P3) die zumindest eine Randbedingung (BC) und die zumindest eine Nebenbedingung (SC) erfüllt.

5. Verfahren (100) nach einem der vorangehenden Ansprüche, wobei die ausgewählte Profilfunktion (PF) ein quintischer Spline ist und zumindest 2-fach stetig differenzierbar ist.

6. Verfahren (100) nach einem der vorangehenden Ansprüche, wobei das zweite Änderungsprofil (P2) zumindest 2-fach stetig differenzierbar ist.

7. Verfahren (100) nach einem der vorangehenden Ansprüche, wobei die zumindest eine Randbedingung (BC) ein Startwert der Prozessgröße (PV), eine Startgeschwindigkeit, eine Startbeschleunigung, ein Endwert der Prozessgröße (PV), eine Endgeschwindigkeit, eine Endbeschleunigung und/oder eine Länge des Änderungsprofils (P) ist.

8. Verfahren (100) nach einem der vorangehenden Ansprüche, wobei die zumindest eine Nebenbedingung (SC) ein Maximalwert der Prozessgröße (PV), ein Minimalwert der Prozessgröße (PV), eine Maximalgeschwindigkeit, eine Minimalgeschwindigkeit, eine Maximalbeschleunigung und/oder eine Minimalbeschleunigung ist.

9. Verfahren (100) nach einem der vorangehenden Ansprüche, wobei das Rückfallprofil (P3) der zumindest einen Randbedingung (BC) und der zumindest einen Nebenbedingung (SC) genügt und zumindest 2-fach stetig differenzierbar ist.

10. Verfahren (100) nach einem der vorangehenden Ansprüche, wobei Echtzeit eine harte Echtzeit ist.

11. Automatisierungssystem (1300) mit einer Prozesseinheit (1301) zum Ausführen eines Automatisierungsprozesses und einer Steuerungseinheit (1303) zum Steuern der Prozesseinheit (1301), wobei die Steuerungseinheit (1303) ausgebildet ist, ein Verfahren (100) nach einem der vorangehenden Ansprüche 1 bis 10 auszuführen.

12. Automatisierungssystem (1300) nach Anspruch 11, wobei das Automatisierungssystem (1300) ein lineares Transportsystem ist, und wobei die Prozesseinheit (1301) umfasst:
zumindest eine lineare Transportvorrichtung (1405) zur Ausführung einer Transportbewegung,
zumindest eine Laufschiene (1407) zur Führung der linearen Transportvorrichtung (1405) in einer vorbestimmten linearen Bahnbewegung; und
eine Antriebseinheit (1412) zum Antrieb der zumindest einen linearen Transportvorrichtung (1405) auf der zumindest einen Laufschiene (1407).

13. Automatisierungssystem (1300) nach Anspruch 11, wobei das Automatisierungssystem (1300) ein planares Transportsystem ist, und wobei die Prozesseinheit (1301) umfasst:
zumindest eine planare Transportvorrichtung (1605) zur Ausführung einer Transportbewegung,
zumindest ein planares Bahnelement (1607) zur Führung der planaren Transportvorrichtung (1605) in einem vordefinierten zweidimensionalen Führungsbereich, in dem die planare Transportvorrichtung (1605) eine Transportbewegung ausführen kann; und
eine Antriebseinheit (1612) zum Antrieb der zumindest einen planaren Transportvorrichtung (1605) auf dem zumindest einen planaren Bahnelement (1607).

14. Automatisierungssystem (1300) nach Anspruch 12 oder 13, wobei die Prozessgröße (PV) eine Position der linearen Transportvorrichtung (1405) oder der planaren Transportvorrichtung (1605) in einem Koordinatensystem ist, wobei die zumindest eine Randbedingung (BC) eine Startposition, eine Startgeschwindigkeit, eine Startbeschleunigung, eine Startrichtung, eine Endposition, eine Endgeschwindigkeit, eine Endrichtung und/oder eine Endbeschleunigung der linearen Transportvorrichtung (1405) und/oder der planaren Transportvorrichtung (1605)umfasst, und wobei die zumindest eine Nebenbedingung (SC) eine Maximalposition, eine Minimalposition, eine Maximalgeschwindigkeit, eine Minimalgeschwindigkeit, eine Maximalbeschleunigung und/oder eine Minimalbeschleunigung der linearen Transportvorrichtung (1405) und/oder der planaren Transportvorrichtung (1605) umfasst.

15. Computerprogramm (1703), umfassend Befehle, die bei der Ausführung des Computerprogramms (1703) durch einen Computer oder die Steuerungseinheit (1303) diese veranlassen, ein Verfahren (100) gemäß einem der Ansprüche 1 bis 10 auszuführen.

## Claims

1. Method (100) for controlling an automation process in real time on the basis of at least one change profile (P) of at least one process variable (PV), wherein a change profile (P) describes a course of the process variable (PV) with respect to an argument (X) of the process variable (PV), the method steps comprising:
determining (101) a first change profile (P1) by means of a recognition process that has real-time capability and is based on a non-linear optimization process while taking into account at least one boundary condition (BC) of the process variable (PV), wherein the recognition process that has real-time capability and is based on a non-linear optimization process is implemented by an artificial neural network, and wherein a non-linear optimization process is carried out in a learning process of the artificial neural network;
determining (103) a second change profile (P2) by means of a numerical algorithm on the basis of the first change profile (P1), comprising:
adapting (105) a selected profile function (PF) to the first change profile (P1) by means of a numerical adaptation process, wherein, during the adaptation (105) of the profile function (PF) to the first change profile (P1), consideration is given to the profile function (PF) fulfilling the boundary condition (BC); and
identifying (107) the adapted profile function (PF) as a second change profile (P2);
checking (109) whether the second change profile (P2) satisfies at least one secondary condition (SC) of the process variable (PV);
controlling (111) the automation process on the basis of the second change profile (P2) if the second change profile (P2) satisfies the at least one secondary condition (SC); and
controlling (113) the automation process on the basis of a predetermined fallback profile (P3) if the second change profile (P2) does not satisfy the at least one secondary condition (SC).

2. Method (100) according to Claim 1, wherein the adaptation (105) of the selected profile function (PF) to the first change profile (P1) of the numerical adaptation process comprises the method steps:
determining (115) at least one data point (DP) of the first change profile (P1); and
adapting (117) the selected profile function (PF) to the at least one data point (DP) of the first change profile (P1) and to the at least one boundary condition (BC).

3. Method (100) according to one of the preceding claims, wherein the method step (101) of determining a first change profile (P1) comprises the method step:
determining (120) the first change profile (P1) by means of a recognition process that has real-time capability and is based on a non-linear optimization process while taking into account the at least one boundary condition (BC) and the at least one secondary condition (SC).

4. Method (100) according to one of the preceding claims, further comprising the method step:
generating (121) the fallback profile (P3), wherein the fallback profile (P3) satisfies the at least one boundary condition (BC) and the at least one secondary condition (SC).

5. Method (100) according to one of the preceding claims, wherein the selected profile function (PF) is a quintic spline and can be differentiated continuously at least twice.

6. Method (100) according to one of the preceding claims, wherein the second change profile (P2) can be differentiated continuously at least twice.

7. Method (100) according to one of the preceding claims, wherein the at least one boundary condition (BC) is a starting value of the process variable (PV), a starting speed, a starting acceleration, a final value of the process variable (PV), a final speed, a final acceleration and/or a length of the change profile (P).

8. Method (100) according to one of the preceding claims, wherein the at least one secondary condition (SC) is a maximum value of the process variable (PV), a minimum value of the process variable (PV), a maximum speed, a minimum speed, a maximum acceleration and/or a minimum acceleration.

9. Method (100) according to one of the preceding claims, wherein the fallback profile (P3) satisfies the at least one boundary condition (BC) and the at least one secondary condition (SC) and can be differentiated continuously at least twice.

10. Method (100) according to one of the preceding claims, wherein real time is a hard real time.

11. Automation system (1300) having a process unit (1301) for carrying out an automation process and a control unit (1303) for controlling the process unit (1301), wherein the control unit (1303) is designed to carry out a method (100) according to one of the preceding Claims 1 to 10.

12. Automation system (1300) according to Claim 11, wherein the automation system (1300) is a linear transport system, and wherein the process unit (1301) comprises:
at least one linear transport device (1405) for carrying out a transport movement,
at least one running rail (1407) for guiding the linear transport device (1405) in a predetermined linear path movement; and
a drive unit (1412) for driving the at least one linear transport device (1405) on the at least one running rail (1407).

13. Automation system (1300) according to Claim 11, wherein the automation system (1300) is a planar transport system, and wherein the process unit (1301) comprises:
at least one planar transport device (1605) for carrying out a transport movement,
at least one planar path element (1607) for guiding the planar transport device (1605) in a predefined two-dimensional guide area, in which the planar transport device (1605) can carry out a transport movement; and
a drive unit (1612) for driving the at least one planar transport device (1605) on the at least one planar path element (1607).

14. Automation system (1300) according to Claim 12 or 13, wherein the process variable (PV) is a position of the linear transport device (1405) or the planar transport device (1605) in a coordinate system, wherein the at least one boundary condition (BC) comprises a starting position, a starting speed, a starting acceleration, a starting direction, a final position, a final speed, a final direction and/or a final acceleration of the linear transport device (1405) and/or the planar transport device (1605), and wherein the at least one secondary condition (SC) comprises a maximum position, a minimum position, a maximum speed, a minimum speed, a maximum acceleration and/or a minimum acceleration of the linear transport device (1405) and/or the planar transport device (1605).

15. Computer program (1703), comprising commands which, during the execution of the computer program (1703) by a computer or the control unit (1303), cause the latter to carry out a method (100) according to one of Claims 1 to 10.

## Revendications

1. Procédé (100) permettant de commander un processus d'automatisation en temps réel sur la base d'au moins un profil de variation (P) d'au moins une variable de processus (PV), dans lequel un profil de variation (P) décrit une évolution de la variable de processus (PV) par rapport à un argument (X) de la variable de processus (PV), comprenant les étapes de procédé consistant à :
déterminer (101) un premier profil de variation (P1) au moyen d'un procédé de reconnaissance en temps réel, basé sur un processus d'optimisation non linéaire, en tenant compte d'au moins une condition marginale (BC) de la variable de processus (PV), le procédé de reconnaissance en temps réel, basé sur un processus d'optimisation non linéaire, étant réalisé par un réseau neuronal artificiel, et un processus d'optimisation non linéaire étant effectué dans un processus d'apprentissage du réseau neuronal artificiel ;
déterminer (103) un deuxième profil de variation (P2) au moyen d'un algorithme numérique sur la base du premier profil de variation (P1), comprenant :
l'adaptation (105) d'une fonction de profil (PF) sélectionnée au premier profil de variation (P1) au moyen d'un processus d'adaptation numérique, dans lequel, pendant l'adaptation (105) de la fonction de profil (PF) au premier profil de variation (P1), on tient compte du fait que la fonction de profil (PF) remplit la condition marginale (BC) ; et
l'identification (107) de la fonction de profil (PF) adaptée comme un deuxième profil de variation (P2) ;
vérifier (109) si le deuxième profil de variation (P2) remplit au moins une condition secondaire (SC) de la variable de processus (PV) ;
commander (111) le processus d'automatisation sur la base du deuxième profil de variation (P2) si le deuxième profil de variation (P2) remplit ladite au moins une condition secondaire (SC) ; et
commander (113) le processus d'automatisation sur la base d'un profil par défaut prédéterminé (P3) si le deuxième profil de variation (P2) ne remplit pas ladite au moins une condition secondaire (SC).

2. Procédé (100) selon la revendication 1, dans lequel l'adaptation (105) de la fonction de profil (PF) sélectionnée au premier profil de variation (P1) du processus d'adaptation numérique comprend les étapes de procédé consistant à :
déterminer (115) au moins un point de données (DP) du premier profil de variation (P1) ; et
adapter (117) la fonction de profil (PF) sélectionnée audit au moins un point de données (DP) du premier profil de variation (P1) et à ladite au moins une condition marginale (BC).

3. Procédé (100) selon l'une quelconque des revendications précédentes, dans lequel l'étape de procédé (101) de la détermination d'un premier profil de variation (P1) comprend l'étape de procédé consistant à :
déterminer (120) le premier profil de variation (P1) au moyen d'un procédé de reconnaissance en temps réel, basé sur un processus d'optimisation non linéaire, en tenant compte de ladite au moins une condition marginale (BC) et de ladite au moins une condition secondaire (SC).

4. Procédé (100) selon l'une quelconque des revendications précédentes, comprenant en outre l'étape de procédé consistant à :
générer (121) le profil par défaut (P3), le profil par défaut (P3) remplissant ladite au moins une condition marginale (BC) et ladite au moins une condition secondaire (SC).

5. Procédé (100) selon l'une quelconque des revendications précédentes, dans lequel la fonction de profil (PF) sélectionnée est une spline quintique et est au moins doublement différenciable en continu.

6. Procédé (100) selon l'une quelconque des revendications précédentes, dans lequel le deuxième profil de variation (P2) est au moins doublement différenciable en continu.

7. Procédé (100) selon l'une quelconque des revendications précédentes, dans lequel ladite au moins une condition marginale (BC) est une valeur initiale de la variable de processus (PV), une vitesse initiale, une accélération initiale, une valeur finale de la variable de processus (PV), une vitesse finale, une accélération finale et/ou une longueur du profil de variation (P).

8. Procédé (100) selon l'une quelconque des revendications précédentes, dans lequel ladite au moins une condition secondaire (SC) est une valeur maximale de la variable de processus (PV), une valeur minimale de la variable de processus (PV), une vitesse maximale, une vitesse minimale, une accélération maximale et/ou une accélération minimale.

9. Procédé (100) selon l'une quelconque des revendications précédentes, dans lequel le profil par défaut (P3) remplit ladite au moins une condition marginale (BC) et ladite au moins une condition secondaire (SC) et est au moins doublement différenciable en continu.

10. Procédé (100) selon l'une quelconque des revendications précédentes, dans lequel le temps réel est un temps réel rigoureux.

11. Système d'automatisation (1300) comprenant une unité de traitement (1301) pour exécuter un processus d'automatisation et une unité de commande (1303) pour commander l'unité de traitement (1301), dans lequel l'unité de commande (1303) est réalisée pour exécuter un procédé (100) selon l'une quelconque des revendications précédentes 1 à 10.

12. Système d'automatisation (1300) selon la revendication 11, dans lequel le système d'automatisation (1300) est un système de transport linéaire, et dans lequel l'unité de traitement (1301) comprend :
au moins un dispositif de transport linéaire (1405) pour exécuter un mouvement de transport,
au moins un rail de roulement (1407) pour guider le dispositif de transport linéaire (1405) dans un mouvement de parcours linéaire prédéterminé ; et
une unité d'entraînement (1412) pour entraîner ledit au moins un dispositif de transport linéaire (1405) sur ledit au moins un rail de roulement (1407).

13. Système d'automatisation (1300) selon la revendication 11, dans lequel le système d'automatisation (1300) est un système de transport plan, et dans lequel l'unité de traitement (1301) comprend :
au moins un dispositif de transport plan (1605) pour exécuter un mouvement de transport,
au moins un élément de parcours plan (1607) pour guider le dispositif de transport plan (1605) dans une zone de guidage bidimensionnelle prédéfinie dans laquelle le dispositif de transport plan (1605) peut exécuter un mouvement de transport ; et
une unité d'entraînement (1612) pour entraîner ledit au moins un dispositif de transport plan (1605) sur ledit au moins un élément de parcours plan (1607).

14. Système d'automatisation (1300) selon la revendication 12 ou 13, dans lequel la variable de processus (PV) est une position du dispositif de transport linéaire (1405) ou du dispositif de transport plan (1605) dans un système de coordonnées, dans lequel ladite au moins une condition marginale (BC) comprend une position initiale, une vitesse initiale, une accélération initiale, une direction initiale, une position finale, une vitesse finale, une direction finale et/ou une accélération finale du dispositif de transport linéaire (1405) et/ou du dispositif de transport plan (1605), et dans lequel ladite au moins une condition secondaire (SC) est une position maximale, une position minimale, une vitesse maximale, une vitesse minimale, une accélération maximale et/ou une vitesse minimale du dispositif de transport linéaire (1405) et/ou du dispositif de transport plan (1605).

15. Programme informatique (1703), comprenant des commandes qui, lorsque le programme informatique (1703) est exécuté par un ordinateur ou l'unité de commande (1303), font que celui-ci ou celle-ci exécute un procédé (100) selon l'une quelconque des revendications 1 à 10.
